# EUROPEAN PATENT SPECIFICATION

(11) **EP 4 142 363 B1**
(45) Date of publication and mention of the grant of the patent: **25.11.2026**
(21) Application number: 21805260.3
(22) Date of filing: 14.04.2021
(51) Int. Cl.: H04W 36/00, H04W 36/06, H04W 36/22, H04W 72/0453, H04L 5/00

(54) **HANDOVER METHOD AND APPARATUS**
ÜBERGABEVERFAHREN UND -VORRICHTUNG
PROCÉDÉ ET APPAREIL DE TRANSFERT INTERCELLULAIRE

(30) Priority: 15.05.2020 CN 202010414860
(43) Date of publication of application: 01.03.2023
(73) Proprietor: Huawei Technologies Co., Ltd., Longgang District, Shenzhen, Guangdong 518129 (CN)
(72) Inventor: ZHENG, Juan, Shenzhen, Guangdong 518129 (CN); LI, Chaojun, Shenzhen, Guangdong 518129 (CN); FEI, Yongqiang, Shenzhen, Guangdong 518129 (CN); HOU, Hailong, Shenzhen, Guangdong 518129 (CN)
(74) Representative: Thun, Clemens
(86) International application number: PCT/CN2021/087219
(87) International publication number: WO 2021/227755

(56) References cited:
- WO-A1-2018/174128
- CN-A- 110 521 266
- CN-A- 110 536 444
- CN-A- 110 582 982
- CN-A- 110 786 045
- US-A1- 2019 104 543
- US-A1- 2019 268 905
- NOKIA ET AL.: "RRM TC 20B EN-DC interruptions due to active BWP switching (RRC-based switch)", 3GPP TSG-RAN WG4 MEETING #88BIS R4-1813212, 12 October 2018 (2018-10-12), XP051581889

## Description

### CROSS-REFERENCE TO RELATED APPLICATIONS

### TECHNICAL FIELD

This application relates to the field of communications technologies, and in particular, to switching methods and apparatuses

### BACKGROUND

The fifth-generation (Fifth-Generation, 5G) mobile communication technology new radio (New Radio, NR) is a very important basis for next-generation cellular mobile technologies. Services of the 5G technology are very diversified, and may be oriented to an enhanced mobile broadband (Enhanced Mobile Broadband, eMBB) service, an ultra-reliable low-latency communication (Ultra-Reliability Low-Latency Communication, URLLC) service, and a massive machine-type communications (Massive Machine-Type Communications, mMTC) service. The mMTC service may be, for example, an industrial wireless sensor network (Industrial Wireless Sensor Network, IWSN) service, a video surveillance (Video Surveillance) service, or a wearable (Wearable) service.

Currently, the 3rd generation partnership project (3rd generation partnership project, 3GPP) has started research on an NR reduced capability (NR reduced capability, NR REDCAP) terminal device, and this research aims to design a terminal device that meets performance requirements from an IoT market and has low implementation complexity, to expand NR system application in the IoT market. A bandwidth capability of the NR REDCAP terminal device may be far less than a bandwidth capability of a legacy (legacy) NR terminal device. Currently, the bandwidth capability of the legacy terminal device is 100 MHz, and the bandwidth capability of the NR REDCAP terminal device may be only 20 MHz. In configurations of some NR systems, the bandwidth capability of the NR REDCAP terminal device may be further reduced, for example, to 5 MHz or 10 MHz. Because the bandwidth capability of the NR REDCAP terminal device is far less than 100 MHz, complexity of the NR REDCAP terminal device may be greatly reduced. In embodiments of this application, the REDCAP UE may also be referred to as NR-Light or NR-lite UE.

Because the bandwidth capability of the NR REDCAP terminal device is far less than 100 MHz, data transmission performance of the NR REDCAP terminal device is low. Therefore, how to improve the data transmission performance of the NR REDCAP terminal device is a problem to be urgently resolved.

Further, US 2019/104543 A1 refers to a method and apparatus for scheduling a data channel to support a user equipment (UE) using various bandwidth parts (BWPs) in a next-generation/5G radio access network. The method may include transmitting information on physical layer capability, which includes information on a BWP switching delay type; receiving downlink control information (DCI) including a BWP indication field that indicates one BWP different from an active BWP among BWPs included in a BWP set configured for the UE, and scheduling control information for a data channel; activating a BWP indicated by a value of the BWP indication field in consideration of a transition time determined by the information on the BWP switching delay type; and transceiving the data channel according to the scheduling control information.

### SUMMARY

This application provides switching methods and apparatuses to resolve a problem of how to improve data transmission performance of a terminal device. This problem is solved by the subject matter of the independent claims. Further implementation forms are provided in the dependent claims.

### BRIEF DESCRIPTION OF DRAWINGS

FIG. 1 is a schematic diagram of a network architecture to which embodiments of this application are applicable;
FIG. 2 is a schematic flowchart of a switching method according to an embodiment of this application;
FIG. 3 is a schematic diagram of a switching delay according to an embodiment of this application;
FIG. 4 is a schematic diagram of a frequency resource position according to an embodiment of this application;
FIG. 5 is a schematic diagram of a bandwidth part configuration according to an embodiment of this application;
FIG. 6 is a schematic diagram of a bandwidth part configuration according to an embodiment of this application;
FIG. 7 is a schematic diagram of a bandwidth part configuration according to an embodiment of this application;
FIG. 8 is a schematic diagram of a bandwidth part configuration according to an embodiment of this application;
FIG. 9 is a schematic diagram of a bandwidth part configuration according to an embodiment of this application;
FIG. 10 is a schematic diagram of a scheduled resource for data transmission according to an embodiment of this application;
FIG. 11 is a schematic diagram of a virtual carrier according to an embodiment of this application;
FIG. 12 is a schematic diagram of a structure of a communication apparatus according to an embodiment of this application; and
FIG. 13 is a schematic diagram of a structure of a communication apparatus according to an embodiment of this application.

### DESCRIPTION OF EMBODIMENTS

The following describes embodiments of this application in detail with reference to the accompanying drawings of this specification.

Embodiments of this application may be applied to various mobile communication systems, for example, a new radio (new radio, NR) system, a long term evolution (long term evolution, LTE) system, an advanced long term evolution (advanced long term evolution, LTE-A) system, an evolved long term evolution (evolved long term evolution, eLTE) system, and another communication system. This is not specifically limited herein.

In an existing NR system, a terminal device first detects a synchronization signal block (synchronization signal block, SSB) sent by a base station. The SSB includes a primary synchronization signal (primary synchronization signal, PSS), a secondary synchronization signal (secondary synchronization signal, SSS), and a physical broadcast channel (physical broadcast channel, PBCH). The PBCH carries a master information block (master information block, MIB). If the MIB further indicates configuration information of system information block type 1 (system information block type 1, SIB1), or indicates configuration information of control resource set 0 (control resource set zero, CORESET0) of a cell, or indicates configuration information of CORESET0 and configuration information of a search space (search space, SS) associated with CORESET0, such an SSB may be understood as a cell defined SSB (cell defined SSB, CD-SSB). That is, the terminal device may obtain, by detecting the CD-SSB, necessary system information for accessing the cell. Based on the necessary system information, the terminal device may initiate random access to the base station, to establish a data transmission connection to the base station. After establishing a data transmission channel between the terminal device and the base station, the terminal device may perform terminal device-specific data transmission, including downlink data receiving and/or uplink data sending, with the base station. That the data transmission channel is established between the terminal device and the base station may be understood as that the terminal device enters a radio resource control (radio resource control, RRC) connected state (RRC connected state) or an RRC inactive state (RRC inactive state).

In a conventional technology, after the terminal device enters the RRC connected state or the RRC inactive state, regardless of a system bandwidth on a base station side, the base station may configure, for the terminal device, a frequency domain resource range that matches a bandwidth capability of the terminal device, to ensure subsequent data transmission between the base station and the terminal. The base station configures a channel bandwidth (which is also referred to as a carrier) for the terminal device by using RRC-dedicated signaling, where the channel bandwidth is not greater than the bandwidth capability of the terminal device. Different terminal devices may have different channel broadband configurations. The different channel bandwidth configurations include: Center frequencies corresponding to channel bandwidths and/or frequency widths of the channel bandwidths are different. Therefore, even if bandwidth capabilities of the different terminal devices are the same, the base station may configure different channel bandwidths for the different terminal devices. Further, the base station may complete data transmission with the terminal device by configuring a bandwidth part (bandwidth part, BWP) within the configured channel bandwidth corresponding to the terminal device. Each BWP includes resource blocks (resource blocks, RBs) that are contiguous in frequency, where one RB includes 12 subcarriers (Subcarriers). Frequency resources included in different BWPs may or may not overlap. Currently, in consideration of complexity, the base station configures a maximum of four BWPs for one terminal device. The data transmission between the base station and the terminal device may be dynamically adjusted (for example, by using a non-cross-BWP scheduling method or a cross-BWP scheduling method) within a frequency resource range corresponding to the configured BWP. However, at any moment, the terminal device can perform data transmission with the base station by using only one activated BWP. In other words, a frequency resource corresponding to each data transmission of the terminal device can fall within only a frequency resource range corresponding to one BWP.

In addition, in the conventional technology, the configured BWP further needs to include an SSB, to implement SSB-based measurement, for example, mobility-associated radio resource management (radio resource management, RRM) measurement and channel state information (channel state information, CSI) measurement.

According to a data transmission procedure and data transmission requirements in the conventional technology, a channel bandwidth configured for a REDCAP terminal device is not greater than a bandwidth capability of the REDCAP terminal device. Consequently, a BWP can only be within the configured channel bandwidth that is not greater than the bandwidth capability of the REDCAP terminal device, and the configured channel bandwidth and the BWP need to include an SSB.

Based on this, the channel bandwidth (or a carrier) configured by the base station for the REDCAP terminal device is aggregated near only a bandwidth including the SSB. Consequently, a frequency resource range corresponding to data transmission between a narrowband REDCAP terminal device and the base station is limited only near the bandwidth including the SSB. The SSB herein may be a CD-SSB or a non-CD-SSB. Further, in consideration of an application scenario of the REDCAP terminal device, to be specific, a large scale of REDCAP terminal devices appearing in a network including an Internet of Things service, for example, a sensor that performs a sensing function in an industrial wireless sensor network (Industrial Wireless Sensor Network, IWSN), a large quantity of video surveillance cameras in a video surveillance scenario, and smartwatches with an increasingly larger application scale, load balancing cannot be implemented on the base station side, that is, service offloading cannot be performed for a large quantity of REDCAP terminal devices. Consequently, service congestion within the bandwidth capability (for example, 20 MHz) of the REDCAP terminal device including the SSB is caused, and transmission performance of the REDCAP terminal device is reduced.

Further, if scheduling of the REDCAP terminal device in a larger frequency resource range is implemented in the conventional technology, carrier switching or channel bandwidth reconfiguration needs to be performed. The carrier switching or the channel bandwidth reconfiguration is implemented by using RRC signaling, where a configuration delay is large and is at about a hundred-millisecond level. This affects data transmission performance of the REDCAP terminal device. In addition, in a reconfiguration manner, under a constraint of the conventional technology, it further needs to be considered that an SSB, which may be a CD-SSB or a non-CD-SSB, needs to be included in a 20 MHz bandwidth after carrier switching or a channel bandwidth of the REDCAP terminal device after carrier switching. In this case, overheads on a network side are increased.

Further, limited by the bandwidth capability of the NR REDCAP terminal device, the configured BWP is mainly distributed within a bandwidth capability range of the REDCAP terminal device in the conventional technology. This affects a frequency selective scheduling gain and/or a frequency diversity gain of the REDCAP terminal device. It is assumed that a downlink data transmission antenna configuration between a base station and a REDCAP terminal device is 4T2R. Compared with dynamic scheduling of a REDCAP terminal device with 20 MHz in 100 MHz, scheduling of a REDCAP terminal device with fixed 20 MHz in a 100 MHz system bandwidth may cause a loss of about 1.6 dB of a frequency selective scheduling gain on a physical downlink shared channel (physical downlink shared channel, PDSCH).

Therefore, embodiments of this application provide a method, to resolve a problem found by the present invention.

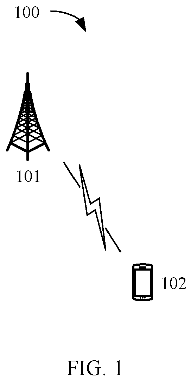

For ease of understanding embodiments of this application, a communication system shown in FIG. 1 is first used as an example to describe in detail a communication system to which embodiments of this application are applicable. FIG. 1 is a schematic diagram of a communication system to which a communication method according to an embodiment of this application is applicable. As shown in FIG. 1, the communication system 100 includes a network device 101 and a terminal device 102. A plurality of antennas may be configured for the network device 101, and a plurality of antennas may also be configured for the terminal device. Optionally, the communication system may further include another terminal device, and examples are not described one by one herein.

In embodiments of this application, a network device may be a radio access device in various standards, for example, may be a next generation NodeB (next Generation NodeB, gNB) in an NR system, or may be a network node included in a gNB, for example, a DU in a central unit-distributed (central unit-distributed, CU-DU) architecture.

In embodiments of this application, a terminal device is a device having a wireless transceiver function, or a chip that can be disposed in the device. Further, embodiments of this application may be applied to a reduced capability terminal device in an NR system, which is referred to as a REDCAP terminal device for short below. Embodiments of this application may be further applied to a terminal device in a future updated system, for example, a terminal device in NR system Release 17 (Release 17, Rel-17) and later releases or a terminal device in another system.

It should be noted that a difference between a first terminal device and a second terminal device may include at least one of the following items.

1. Different bandwidth capabilities: For example, a carrier bandwidth of the first terminal device is not greater than 50 MHz, for example, at least one of 50 MHz, 40 MHz, 20 MHz, 15 MHz, 10 MHz, or 5 MHz, and a carrier bandwidth of the second terminal device is greater than 50 MHz.

2. Different quantities of transmit and receive antennas: For example, the first terminal device may support 2R1T (to be specific, two receive antennas and one transmit antenna), or 1R1T (to be specific, one receive antenna and one transmit antenna). The second terminal device may support 4R2T (to be specific, four receive antennas and two transmit antennas). It may be understood that, if a same data transmission rate is implemented, because a quantity of transmit and receive antennas of the first-type terminal device is less than a quantity of transmit and receive antennas of the second-type terminal device, maximum coverage that can be implemented for data transmission between the first-type terminal device and a base station is less than maximum coverage that can be implemented for data transmission between the second-type terminal device and the base station.

3. Different maximum uplink transmit powers: For example, a maximum uplink transmit power of the first terminal device may be a value between 4 decibel-milliwatts (dBm) and 20 dBm. A maximum uplink transmit power of the second terminal device may be 23 dBm or 26 dBm.

4. Different protocol releases: The first terminal device may be a terminal device in NR Release 17 (Release-17, Rel-17) or a release that comes after NR Rel-17. The second terminal device may be, for example, a terminal device in NR Release 15 (Release-15, Rel-15) or NR Release 16 (Release-16, Rel-16). The second terminal device may also be referred to as an NR legacy (NR legacy) terminal device.

5. Different carrier aggregation capabilities: For example, the first terminal device does not support carrier aggregation, and the second terminal device may support carrier aggregation. For another example, both the first terminal device and the second terminal device may support carrier aggregation, but a maximum quantity of carriers that can be aggregated at the same time in the aggregation supported by the first terminal device is less than a maximum quantity of carriers that can be aggregated at the same time in the aggregation supported by the second terminal device. For example, the first terminal device supports aggregation of a maximum of two carriers at the same time, and the second terminal device may support aggregation of a maximum of five carriers or 32 carriers at the same time.

6. Different duplex capabilities: For example, the first terminal device supports half-duplex frequency division duplex (frequency division duplexing, FDD). The second terminal device supports full-duplex FDD.

7. Different data processing time capabilities: For example, a minimum delay between receiving downlink data and sending a feedback for the downlink data by the first terminal device is greater than a minimum delay between receiving downlink data and sending a feedback for the downlink data by the second terminal device; and/or a minimum delay between sending uplink data and receiving a feedback for the uplink data by the first terminal device is greater than a minimum delay between sending uplink data and receiving a feedback for the uplink data by the second terminal device.

8. Different processing capabilities (abilities/capabilities): For example, a baseband processing capability of the first terminal device is lower than a baseband processing capability of the second terminal device. The baseband processing capability may include at least one of the following items: a maximum quantity of MIMO layers supported when a terminal device performs data transmission, a quantity of HARQ processes supported by a terminal device, or a maximum transport block size (transmission block size, TBS) supported by a terminal device.

9. Different uplink and/or downlink peak transmission rates: A peak transmission rate is a maximum data transmission rate that can be reached by a terminal device in a unit of time (for example, per second). An uplink peak rate supported by the first terminal device may be lower than an uplink peak rate supported by the second terminal device; and/or a downlink peak rate supported by the first terminal device may be lower than a downlink peak rate supported by the second terminal device. For example, the uplink peak rate of the first terminal device is less than or equal to 50 Mbps, and the downlink peak rate of the first terminal device is less than or equal to 150 Mbps; and the uplink peak rate of the second terminal device is greater than or equal to 50 Mbps, and the downlink peak rate of the second terminal device is greater than or equal to 150 Mbps. For another example, the uplink peak rate or the downlink peak rate of the first terminal device is at a hundred-Mbps level, and the uplink peak rate or the downlink peak rate of the second terminal device is at a Gbps level.

10. Different buffer (buffer) sizes: A buffer (buffer) may be understood as a total layer 2 (Layer 2, L2) buffer size, and is defined as a sum of a quantity of bytes buffered by a terminal device for all radio bearers in a radio link control (radio link control, RLC) transmit window, receive window, and reordering window, and in a packet data convergence protocol (Packet Data Convergence Protocol, PDCP) reordering window. Alternatively, a buffer (buffer) may be understood as a total quantity of soft channel bits that can be used for hybrid automatic repeat request (Hybrid Automatic Repeat reQuest, HARQ) processing.

In the present invention, the first terminal device is a REDCAP terminal device in an NR system, or the first terminal device may also be referred to as a reduced capability terminal device, the reduced capability terminal device, REDCAP UE, reduced capacity UE, mMTC UE, or the like. The NR system may further include another terminal device, for example, the second terminal device. The second terminal device is a legacy capability, normal capability, or high capability terminal device, or may be referred to as a legacy terminal device or legacy UE. The second terminal device and the first terminal device have the foregoing distinguishing features.

Certainly, the foregoing is merely an example, and there may be another difference between the REDCAP terminal device and the legacy terminal device. Examples are not described one by one herein.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to resolving similar technical problems.

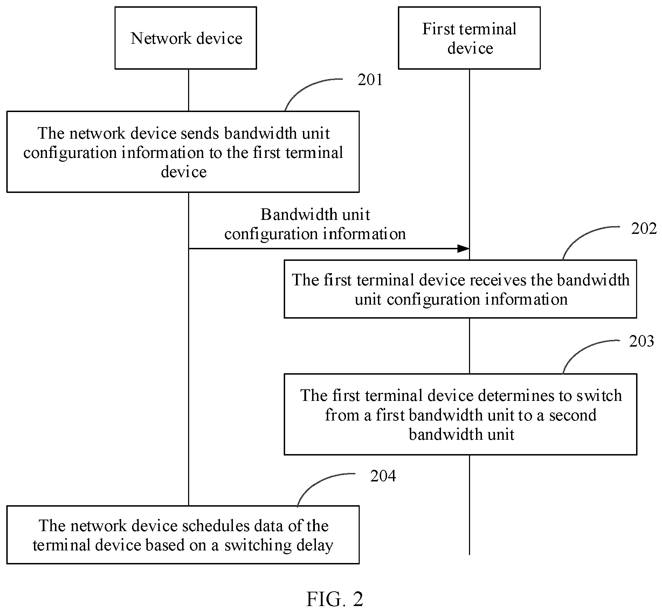

With reference to the foregoing descriptions, FIG. 2 is a schematic flowchart of a switching method according to an embodiment of this application. In a procedure shown in FIG. 2, a first terminal device may be a REDDCAP terminal device, or may be a terminal device in an NR system. A second terminal device may be a legacy terminal device in the NR system. The method includes the following steps.

Step 201: A network device sends bandwidth unit configuration information to the first terminal device.

The bandwidth unit configuration information includes configuration information of a first bandwidth unit and configuration information of a second bandwidth unit. Alternatively, this may be understood as: The bandwidth unit configuration information may indicate at least two bandwidth units, where the at least two bandwidth units include a first bandwidth unit and a second bandwidth unit.

It should be noted that the bandwidth unit configuration information includes frequency resource position information of a bandwidth unit, where the frequency resource position information includes at least one of the following items: a bandwidth of the bandwidth unit, a frequency resource start position of the bandwidth unit, and a frequency resource end position of the bandwidth unit. The configuration information of the first bandwidth unit includes frequency resource position information of the first bandwidth unit, where the frequency resource position information includes at least one of the following items: a bandwidth of the first bandwidth unit, a frequency resource start position of the first bandwidth unit, and a frequency resource end position of the first bandwidth unit. The configuration information of the second bandwidth unit includes frequency resource position information of the second bandwidth unit, where the frequency resource position information includes at least one of the following items: a bandwidth of the second bandwidth unit, a frequency resource start position of the second bandwidth unit, and a frequency resource end position of the second bandwidth unit. The configuration information of the first bandwidth unit and the configuration information of the second bandwidth unit may be sent by using one piece of configuration information, or may be sent by using configuration information respectively corresponding to the configuration information of the first bandwidth unit and the configuration information of the second bandwidth unit. That is, the bandwidth unit configuration information herein may correspond to one piece of configuration information, or may respectively correspond to the configuration information of the first bandwidth and the configuration information of the second bandwidth. For example, the bandwidth unit configuration information is carried by using radio resource control (radio resource control, RRC) signaling. The configuration information of the first bandwidth unit and the configuration information of the second bandwidth unit that are included may be information included in one information element (information element, IE), or may respectively be information included in an IE corresponding to the first bandwidth unit and information included in an IE corresponding to the second bandwidth unit.

Optionally, the bandwidth unit configuration information for indicating the configuration information of the first bandwidth unit and the configuration information of the second bandwidth unit may be sent by using one or more messages or signaling, and one piece of information may be sent at a time, or a plurality of pieces of information may be separately sent. That is, the bandwidth unit configuration information may be sent by using one piece of configuration information, or may be sent by using configuration information respectively corresponding to the first bandwidth unit and the second bandwidth unit. That is, the bandwidth unit configuration information herein may correspond to one piece of configuration information, or may respectively correspond to the configuration information of the first bandwidth and the configuration information of the second bandwidth. For example, the bandwidth unit configuration information is carried by using radio resource control (radio resource control, RRC) signaling. The configuration information of the first bandwidth unit and the configuration information of the second bandwidth unit that are included may be information included in one information element (information element, IE), or may respectively be information included in an IE corresponding to the first bandwidth unit and information included in an IE corresponding to the second bandwidth unit.

Step 202: The first terminal device receives the bandwidth unit configuration information.

Step 203: The first terminal device determines to switch from the first bandwidth unit to the second bandwidth unit.

A switching delay of the first terminal device switching from the first bandwidth unit to the second bandwidth unit is a first delay, the first delay is less than a second delay, and the second delay is a switching delay supported by the second terminal device.

Alternatively, a switching delay of the first terminal device switching from the first bandwidth unit to the second bandwidth unit is one of N delays, the N delays are switching delays supported by the first terminal device, N is an integer greater than or equal to 2, and the N delays include a first delay.

Alternatively, a switching delay of the first terminal device switching from the first bandwidth unit to the second bandwidth unit is one of N delays, the N delays are switching delays supported by the first terminal device, N is an integer greater than or equal to 2, the N delays include a first delay, the first delay is less than a second delay, and the second delay is a switching delay supported by the second terminal device; or the first delay is less than one of the N delays other than the first delay; or the first delay is less than both a second delay and one of the N delays other than the first delay.

The delay other than the first delay is, for example, the second delay.

In the present invention, the first terminal device determines, by receiving indication information sent by the network device, to switch from the first bandwidth unit to the second bandwidth unit. The indication information may be sent by using RRC signaling, medium access control (medium access control, MAC) signaling, or physical layer signaling. For example, the indication information may be carried in RRC reconfiguration signaling, or may be downlink control information (downlink control information, DCI).

In addition, the first terminal device may alternatively switch from the first bandwidth unit to the second bandwidth unit by using a timer. For example, the first terminal device detects no corresponding scheduling information within a timer (for example, a BWP-inactivity timer (BWP-inactivity timer)) preset in the first bandwidth unit. In this case, the terminal device may switch from the first bandwidth unit to the second bandwidth unit after the timer.

Step 204: The network device schedules data of the terminal device based on the switching delay.

According to the foregoing method procedure, when the switching delay of the first terminal device switching from the first bandwidth unit to the second bandwidth unit is the first delay, faster bandwidth unit switching may be implemented. In this case, the first terminal device may quickly perform dynamic data transmission within a large system bandwidth, to ensure a frequency selective scheduling gain or a frequency diversity gain and/or cell load balancing.

In embodiments of this application, a bandwidth unit corresponds to a resource including contiguous resource blocks (resource blocks, RBs) on one carrier. Sizes of resources corresponding to different bandwidth units may be the same or may be different. Subcarrier spacings (subcarrier spacings, SCSs) corresponding to different bandwidth units may be the same or may be different. A bandwidth corresponding to a bandwidth unit may be represented by using an SCS and a quantity of RBs that correspond to the bandwidth unit, or may be directly represented as L Hz, where L is a positive integer not less than 0. For example, if a subcarrier spacing corresponding to a bandwidth unit is 30 KHz, and a quantity of RBs is 10, it may be determined that a bandwidth size corresponding to the bandwidth unit is 3.6 MHz. The terminal device may perform data transmission with the network device by using a resource included in a bandwidth unit (for example, the bandwidth unit includes 20 RBs from RB 0 to R 19, and the network device schedules the terminal device to transmit DL or UL data on RB 5 to RB 10). Optionally, in embodiments of this application, the bandwidth unit may be a bandwidth part (bandwidth part, BWP).

The first terminal device respectively determines, based on the configuration information of the first bandwidth unit and the configuration information of the second bandwidth unit, the frequency resource position of the first bandwidth unit and the frequency resource position of the second bandwidth unit. Based on this, switching of a frequency resource for data transmission between the first terminal device and the network device may be implemented. To be specific, before the switching, the first terminal device performs data transmission with the network device in a frequency resource range included in the first bandwidth unit, and after the switching, the first terminal device performs data transmission with the network device in a frequency resource range included in the second bandwidth unit.

In embodiments of this application, the switching delay of the first terminal device switching from the first bandwidth unit to the second bandwidth unit may be a delay corresponding to bandwidth unit switching triggered based on physical layer signaling. Specifically, after receiving the physical layer signaling for triggering the bandwidth unit switching, the first terminal device may perform data transmission with the network device through the second bandwidth unit after the switching delay. Alternatively, provided that it is ensured that bandwidth unit switching is completed after the switching, the delay of the terminal device switching from the first bandwidth unit to the second bandwidth unit may be less than the switching delay.

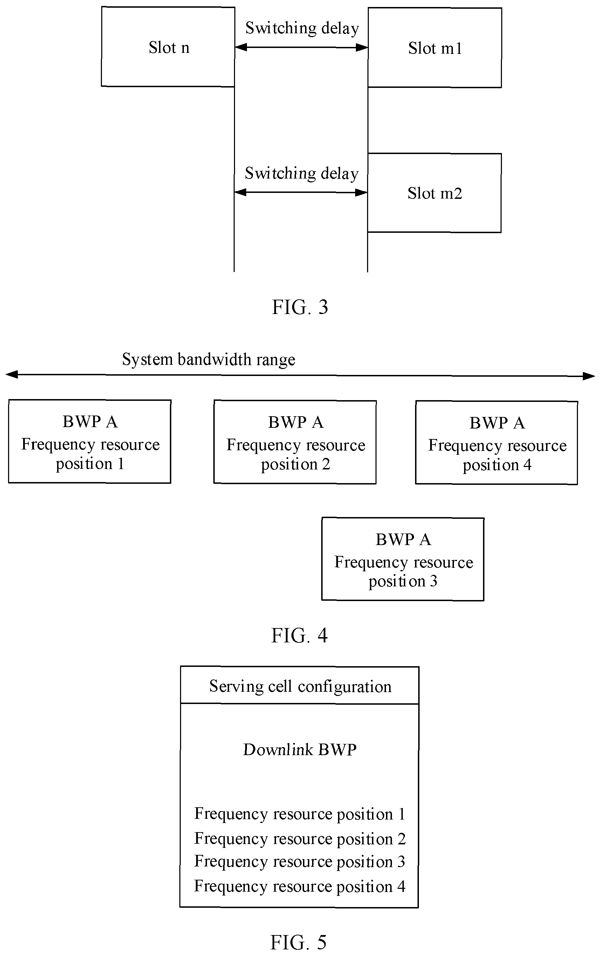

As shown in FIG. 3, in embodiments of this application, the switching delay T_{switchDelay} corresponding to the bandwidth unit switching triggered based on the physical layer signaling is defined as follows. Assuming that the first terminal device receives, in a downlink time unit n, the physical layer signaling that is sent by the network device and that triggers the bandwidth unit switching, the first terminal device needs to receive, in an earliest downlink time unit after the downlink time unit n after T_{switchDelay} elapses, a PDSCH and another physical downlink channel or signal, or the first terminal device needs to send, in an earliest uplink time unit after the downlink time unit n after T_{switchDelay} elapses, a PUSCH and another physical uplink channel or signal. A time unit herein may be a slot (slot) in NR, or may be a subframe, a radio frame, or the like in LTE. This is not limited in embodiments of this application. In FIG. 3, an example in which the time unit is the slot is used. After T_{switchDelay} elapses, the earliest downlink time unit after the downlink time unit n is slot m1. Alternatively, after T_{switchDelay} elapses, the earliest uplink time unit after the downlink time unit n is slot m2. Another case is not described.

For example, there may be a plurality of implementations for the switching delay of the first terminal device switching from the first bandwidth unit to the second bandwidth unit. The following separately describes the implementations.

In a first possible implementation, the first terminal device may support one switching delay, namely, a first delay.

Regardless of whether the first terminal device switches from the first bandwidth unit to the second bandwidth unit that are on a same carrier or from the first bandwidth unit on a first carrier to the second bandwidth unit on a second carrier, the switching delay is the first delay. In a case, there is no correspondence between a first delay and a parameter such as a subcarrier spacing of a bandwidth unit. In other words, regardless of specific values of the SCS, the first switching delay remains a same value. In another case, the first delay may have different values when corresponding to different subcarrier spacings (subcarrier spacings, SCSs). For example, when the SCSs may be 15 KHz, 30 KHz, 60 KHz, or 120 KHz, the first delay may correspond to at least two values used for the different SCSs, but does not correspond to the values of the four different SCSs. For example, when SCS = 15 KHz or 30 KHz, the first delay is a same value, or when SCS = 60 KHz or 120 KHz, the first delay is another value. That is, in embodiments of this application, switching delays corresponding to different SCSs may be considered as one switching delay, for example, the first delay. The first delay is less than a second delay, where the second delay may be a switching delay corresponding to BWP switching performed by the second terminal device in a corresponding SCS.

In a second possible implementation, the N switching delays include at least two switching delays, where the two switching delays include a first delay. When the first terminal device switches from the first bandwidth unit to the second bandwidth unit that are on a same carrier, where the first bandwidth unit is associated or correlated with the second bandwidth unit; or when the first terminal device switches from the first bandwidth unit on a first carrier to the second bandwidth unit on a second carrier, where the first bandwidth unit is associated or correlated with the second bandwidth unit, the switching delay of the first terminal device performing switching is the first delay. Otherwise, the switching delay of the first terminal device performing bandwidth unit switching is another delay other than the first delay of the two switching delays, where the another delay herein is, for example, a second delay.

In another scenario in the second possible implementation, the another delay other than the first delay of the two delays may be a third delay. The first terminal device switches from the first bandwidth unit to the second bandwidth unit that are on a same carrier, where the switching delay of the first terminal device performing bandwidth unit switching is the first delay. The first terminal device switches from the first bandwidth unit on a first carrier to the second bandwidth unit on a second carrier, where the switching delay of the first terminal device performing switching is the third delay.

In a third possible implementation, the N switching delays include at least three switching delays, where the three switching delays include a first delay and a third delay.

The first terminal device switches from the first bandwidth unit to the second bandwidth unit that are on a same carrier, where the first bandwidth unit is associated or correlated with the second bandwidth unit, and the switching delay of the first terminal device performing switching is the first delay. The first terminal device switches from the first bandwidth unit to the second bandwidth unit that are on a same carrier, where the first bandwidth unit is not associated or correlated with the second bandwidth unit, and the switching delay of the first terminal device performing switching is another delay other than the first delay and the third delay of the three switching delays. The another delay herein is, for example, a second delay, and the second delay corresponds to a bandwidth unit switching delay of the second terminal device. The first terminal device switches from the first bandwidth unit on a first carrier to the second bandwidth unit on a second carrier, where the switching delay of the first terminal device performing switching is the third delay.

In a fourth possible implementation, the N switching delays include at least three switching delays, where the three switching delays include a first delay and a third delay.

The first terminal device switches from the first bandwidth unit to the second bandwidth unit that are on a same carrier, where the first bandwidth unit is associated or correlated with the second bandwidth unit, and the switching delay of the first terminal device performing switching is the first delay. The first terminal device switches from the first bandwidth unit to the second bandwidth unit that are on a same carrier, where the first bandwidth unit is not associated or correlated with the second bandwidth unit, and the switching delay of the first terminal device performing switching is another delay other than the first delay and the third delay of the three switching delays. The another delay herein is, for example, a second delay, and the second delay corresponds to a bandwidth unit switching delay of the second terminal device.

The first terminal device switches from the first bandwidth unit on a first carrier to the second bandwidth unit on a second carrier, where the first bandwidth unit is associated or correlated with the second bandwidth unit, and the switching delay is the third delay. The first terminal device switches from the first bandwidth unit on a first carrier to the second bandwidth unit on a second carrier, where the first bandwidth unit is not associated or correlated with the second bandwidth unit, and the switching delay of the first terminal device performing switching is another delay other than the first delay and the third delay of the three switching delays. The another delay herein is, for example, a second delay, and the second delay corresponds to a bandwidth unit switching delay of the second terminal device.

In a fifth possible implementation, the N switching delays include at least four switching delays, where the four switching delays include a first delay, a third delay, and a fourth delay.

The first terminal device switches from the first bandwidth unit to the second bandwidth unit that are on a same carrier, where the first bandwidth unit is associated or correlated with the second bandwidth unit, and the switching delay of the first terminal device performing switching is the first delay.

The first terminal device switches from the first bandwidth unit to the second bandwidth unit that are on a same carrier, where the first bandwidth unit is not associated or correlated with the second bandwidth unit, and the switching delay of the first terminal device performing switching is another delay other than the first delay, the third delay, and the fourth delay of the four switching delays. The another delay herein may be, for example, a second delay, and the second delay corresponds to a bandwidth unit switching delay of the second terminal device.

The first terminal device switches from the first bandwidth unit on a first carrier to the second bandwidth unit on a second carrier, where the first bandwidth unit is associated or correlated with the second bandwidth unit, and the switching delay of the first terminal device performing switching is the third delay.

The first terminal device switches from the first bandwidth unit on a first carrier to the second bandwidth unit on a second carrier, where the first bandwidth unit is not associated or correlated with the second bandwidth unit, and the switching delay of the first terminal device performing switching is the fourth delay.

In embodiments of this application, the first delay is less than the second delay, and the second delay is the switching delay supported by the second terminal device. Alternatively, the first delay is less than the another delay other than the first delay of the N delays. Optionally, the N delays may include the second delay, where N is an integer greater than or equal to 2. The another delay in the second possible implementation to the fifth possible implementation may also be the second delay. In embodiments of this application, the fourth delay is greater than the third delay. Optionally, the third delay may be less than the second delay and is not equal to the first delay.

In a possible implementation, the first delay is less than the second delay, and the second delay is a switching delay supported by the second terminal device. Further, because the second delay has a plurality of values, there are also a plurality of possibilities for the first delay being less than the second delay. For example, the switching delay supported by the second terminal device, namely, the second delay, may be shown in Table 1.

**Table 1**

| µ | NR slot length (ms) | Second delay (slot) | |
|---|---|---|---|
| | | type 1 | type 2 |
| 0 | 1 | 1 | 3 |
| 1 | 0.5 | 2 | 5 |
| 2 | 0.25 | 3 | 9 |
| 3 | 0.125 | 6 | 18 |

In Table 1, µ corresponds to different SCSs. Specifically, SCSs corresponding to µ = 0, µ = 1, µ = 2, and µ = 3 are 15 KHz, 30 KHz, 60 KHz, and 120 KHz respectively. Type 1 and type 2 are determined based on a capability of the second terminal device. If the capability of the second terminal device supports only type 1, the second delay may correspond to a delay defined in a column of type 1 in Table 1. If the capability of the second terminal device supports only type 2, the second delay may correspond to a delay defined in a column of type 2 in Table 1.

With reference to Table 1, in a possible case, when the capability of the second terminal device supports type 1, that the first delay is less than the second delay may mean that the first delay is less than a minimum delay of the delays defined in the column of type 1 in Table 1, that is, the first delay is less than 1 ms.

In another possible case, when the capability of the second terminal device supports type 2, that the first delay is less than the second delay may mean that the first delay is less than a minimum delay of the delays defined in the column of type 2 in Table 1, that is, the first delay is less than 3 ms.

In another possible case, regardless of a type the capability of the second terminal device supports, that the first delay is less than the second delay may mean that the first delay is less than the minimum delay in Table 1, that is, the first delay is less than 1 ms.

In another possible case, when the capability of the second terminal device supports type 1, that the first delay is less than the second delay may mean that the first delay is less than at least one of the delays defined in the column of type 1 in Table 1. For example, the first delay is less than the second delay corresponding to SCS = 15 KHz and/or 30 KHz. It is not required that the first delay is less than the second delays corresponding to all SCSs. For example, when SCS = 120 KHz, the first delay may be the same as the second delay.

In another possible case, when the capability of the second terminal device supports type 2, that the first delay is less than the second delay may mean that the first delay is less than at least one of the delays defined in the column of type 2 in Table 1. For example, the first delay is less than the second delay corresponding to SCS = 15 KHz and/or 30 KHz. It is not required that the first delay is less than the second delays corresponding to all SCSs. For example, when SCS = 120 KHz, the first delay may be the same as the second delay.

In a second possible implementation, the first terminal device may support the N switching delays, where N is an integer greater than or equal to 2, and the N delays include the first delay.

In this manner, in a possible case, the first delay is less than the second delay, and the second delay is a switching delay supported by the second terminal device. This case is the same as that described above.

In this manner, in another possible case, the first delay is less than one of the N delays other than the first delay. In this case, each of the N switching delays corresponds to one subcarrier spacing or a plurality of subcarrier spacings. In embodiments of this application, a switching delay corresponding to a plurality of subcarrier spacings may also be considered as one delay. This is because for bandwidth unit switching, a subcarrier spacing corresponding to the switching is determined. In this case, that the first delay is less than one of the N delays other than the first delay may include the following understanding.

(1) For each given SCS, the first delay is less than one of the N delays other than the first delay. For example, when SCS = 15 KHz, the first delay is less than one of the N delays other than the first delay; and when SCS = 30 KHz, the first delay is also less than one of the N delays. For example, when SCS = 15 KHz, 30 KHz, 60 KHz, and 120 KHz, one of the N delays other than the first delay corresponds to different values, for example, respectively corresponds to X1, X2, X3, and X4. When corresponding to each SCS, the first delay is respectively less than X1, X2, X3, and X4.

(2) For at least one SCS, the first delay is less than one of the N delays other than the first delay. For example, when SCS = 15 KHz, 30 KHz, 60 KHz, and 120 KHz, one of the N delays other than the first delay corresponds to different values, for example, respectively corresponds to X1, X2, X3, and X4. In this case, the first delay may be less than only at least one of X1, X2, X3, and X4. For example, when SCS = 15 KHz and 30 KHz, the first delay may be less than X1 and X2 respectively. When SCS = 60 KHz and 120 KHz, a relationship between the first delay and X3 and a relationship between the first delay and X4 are not limited.

In this manner, in another possible case, the first delay is less than the second delay and another delay other than the first delay of the N switching delays, and the second delay is a switching delay supported by the second terminal device. In this case, the first delay is not only less than the switching delay supported by the second terminal device, but also less than one delay other than the first delay of the switching delays supported by the first terminal device. For that the first delay is less than the switching delay supported by the second terminal device, and that the first delay is less than one delay other than the first delay of the switching delays supported by the first terminal device, refer to the foregoing descriptions.

It may be understood that, in the second possible implementation, the first terminal device may support at least two switching delays, and the first delay is less than another switching delay supported by the first terminal device. The at least two switching delays may or may not include the second delay. That the at least two switching delays include the second delay may be understood as that the at least two switching delays further include a delay, in addition to the first delay, whose value is the same as that of the second delay. For the purpose of brief description, in embodiments of this application, the delay may be considered as the second delay, where the second delay is a short switching delay supported by the second terminal device.

Optionally, the first terminal device may support the N switching delays, and each of the N switching delays corresponds to one subcarrier spacing or a plurality of subcarrier spacings. In embodiments of this application, a switching delay corresponding to a plurality of subcarrier spacings may also be considered as one delay. This is because for bandwidth unit switching, a subcarrier spacing corresponding to the switching is determined. The N switching delays include at least the first delay.

In this implementation, there are also a plurality of possibilities for the first delay being less than the second delay.

In a possible case, the first delay corresponds to a first subcarrier spacing, and the second delay is a minimum delay that is of a legacy terminal device and that corresponds to the first subcarrier spacing in an NR system.

Optionally, any delay other than the first delay of the N switching delays is less than or equal to a minimum delay corresponding to a subcarrier spacing corresponding to the any delay in the NR system.

For example, if a subcarrier spacing corresponding to the first delay is 30 KHz, it can be learned from Table 1 that a minimum delay corresponding to 30 KHz is 2 ms, the second delay is 2 ms, and the first delay is less than 2 ms. When N = 4, the N delays may be shown in Table 2.

**Table 2**

| µ | NR slot length (ms) | First delay (slot) |
|---|---|---|
| 0 | 1 | Less than or equal to 1 |
| 1 | 0.5 | Less than 2 |
| 2 | 0.25 | Less than or equal to 3 |
| 3 | 0.125 | Less than or equal to 6 |

Optionally, the first delay may be a smallest delay of the N delays. With reference to the foregoing examples, the N delays may alternatively be shown in Table 3.

**Table 3**

| µ | NR slot length (ms) | First delay (slot) |
|---|---|---|
| 0 | 1 | Less than 1 |
| 1 | 0.5 | Less than or equal to 2 |
| 2 | 0.25 | Less than or equal to 3 |
| 3 | 0.125 | Less than or equal to 6 |

In Table 3, for example, the first delay of the N switching delays corresponding to the first terminal device is less than one slot only when µ is 0. When µ is set to another value (for example, 1, 2, or 3), a corresponding switching delay of the N switching delays may be less than or equal to a delay defined in the column of type 1.

Alternatively, any delay other than the first delay of the N switching delays is less than or equal to any delay corresponding to a subcarrier spacing corresponding to the any delay in the NR system. For example, the first delay is a smallest delay of the N delays. With reference to the foregoing examples, the N delays may alternatively be shown in Table 4.

**Table 4**

| µ | NR slot length (ms) | First delay (slot) |
|---|---|---|
| 0 | 1 | Less than 1 |
| 1 | 0.5 | Less than or equal to 2 |
| 2 | 0.25 | Less than or equal to 9 |
| 3 | 0.125 | Less than or equal to 18 |

In Table 4, for example, the first delay of the N switching delays corresponding to the first terminal device is less than one slot only when µ is 0. When µ is 1, a corresponding switching delay of the N switching delays may be less than or equal to a delay defined in the column of type 1. When µ is 2 or 3, a corresponding switching delay of the N switching delays may be less than or equal to a delay defined in the column of type 2.

Optionally, the first terminal device may report a capability of the first terminal device to the network device. For example, the reported capability is that type 1 or type 2 is supported.

In this case, the first delay corresponds to a first subcarrier spacing, and the second delay is a delay that is of the type supported by the first terminal device and that corresponds to the first subcarrier spacing in the NR system.

Optionally, any delay other than the first delay of the N switching delays is less than or equal to a delay that corresponds to the type supported by the first terminal device, where the delay corresponds to a subcarrier spacing corresponding to the any delay in the NR system.

For example, the capability reported by the first terminal device to the network device is that type 2 is supported. If a subcarrier spacing corresponding to the first delay is 30 KHz, it can be learned from Table 1 that when the type supported by the first terminal device is type 2, a delay corresponding to 30 KHz is 5 ms, the second delay is 5 ms, and the first delay is less than 5 ms. When N = 4, the N delays may be shown in Table 5.

**Table 5**

| µ | NR slot length (ms) | First delay (slot) |
|---|---|---|
| 0 | 1 | Less than or equal to 3 |
| 1 | 0.5 | Less than 5 |
| 2 | 0.25 | Less than or equal to 9 |
| 3 | 0.125 | Less than or equal to 18 |

In Table 5, when µ is 1, the first delay is fewer than five slots. When µ is set to another value (for example, 0, 2, or 3), a corresponding switching delay of the N switching delays may be less than or equal to a delay defined in the column of type 2.

Optionally, in embodiments of this application, the switching delay of the first terminal device switching from the first bandwidth unit to the second bandwidth unit may alternatively be bandwidth unit switching triggered based on radio resource control (radio resource control, RRC) signaling.

A switching delay T_{RRCdelay} of the bandwidth unit switching triggered based on the RRC signaling may be defined as follows. Assuming that a downlink time unit n is the last downlink time unit including the RRC signaling for triggering the bandwidth unit switching, the first terminal device needs to receive, in an earliest downlink time unit after the downlink time unit n after T_{RRCdelay} elapses, a PDSCH and another physical downlink channel or signal. Alternatively, the first terminal device needs to send, in an earliest uplink time unit after the downlink time unit n after T_{RRCdelay} elapses, a PUSCH and another physical uplink channel or signal.

T_{RRCdelay} = T_{RRCprocessingDelay} + T_{BWPswitchDelayRRC}, where T_{RRCprocessingDelay} and T_{BWPswitchDelayRRC} **respectively** represent a delay introduced in an RRC process and a delay required by the first terminal device to perform bandwidth unit switching.

In this case, that the first delay is less than the second delay may mean that a switching delay T_{RRCdelay} required by the first terminal device to perform bandwidth unit switching is less than a switching delay T_{RRCdelay} required by the second terminal device to perform bandwidth unit switching. To be specific, at least one of the following items may be included:
(1) T_{RRCprocessingDelay} corresponding to the first terminal device is less than T_{RRCprocessingDelay} corresponding to the second terminal device; or
(2) T_{BWPswitchDelayRRC} corresponding to the first terminal device is less than T_{BWPswitchDelayRRC} corresponding to the second terminal device.

Further, in embodiments of this application, a switching delay of the first terminal device switching between correlated bandwidth units is the first delay. Optionally, a switching delay of the first terminal device switching between bandwidth units that are not correlated is the second delay, or is another delay, for example, the second delay, other than the first delay of the N switching delays, where the another delay is not less than the first delay.

Optionally, in embodiments of this application, any delay included in the first delay, the second delay, and the N switching delays may be represented by using a quantity of orthogonal frequency division multiplexing (orthogonal frequency division multiplexing, OFDM) symbols, a quantity of slots (slots), or a specific time value (for example, 140 µs), or in another form. This is not specifically limited. Specifically, the first delay may correspond to different SCSs, and may be a same time value, for example, a value not greater than 500 µs, for example, 140 µs, 200 µs, 250 µs, or 400 µs. Specifically, when the first delay is represented by using the quantity of OFDM symbols, when SCS = 15 KHz, the first delay is two OFDM symbols, when SCS = 30 KHz, the first delay is four OFDM symbols, when SCS = 60 KHz, the first delay is M OFDM symbols, where M is an integer not greater than 8; or when SCS = 120 KHz, the first delay is K OFDM symbols, where K is an integer not greater than 16. Alternatively, the first delay corresponding to different SCSs may correspond to different time values. For example, the first delay corresponding to SCS = 15 KHz and SCS = 30 KHz is one time value, and the first delay corresponding to SCS = 60 KHz and SCS = 120 KHz is another time value.

The following separately provides descriptions with reference to different embodiments.

### Embodiment 1

In Embodiment 1, bandwidth unit configuration information may include configuration information of at least two bandwidth units, and the at least two bandwidth units include a first bandwidth unit and a second bandwidth unit.

Configuration information of each bandwidth unit may include a frequency resource position and/or an identifier of the bandwidth unit. The configuration information of each bandwidth unit may further include other content. This is not limited in this embodiment of this application.

The identifier may be a BWP identifier (BWP ID) or the like. The frequency resource position may be a position of a center frequency of the bandwidth unit, a position of a frequency corresponding to a lowest resource block of the bandwidth unit, a position of a frequency corresponding to a highest frequency resource block of the bandwidth unit, or the like. Different indexes may be used to correspond to different frequency resource positions. Alternatively, the frequency resource position may correspond to a bandwidth and a frequency position of the bandwidth unit. For example, the frequency resource position may correspond to a frequency position corresponding to a lowest resource block of the bandwidth unit and a frequency position corresponding to a highest resource block of the bandwidth unit. For another example, the frequency resource position may correspond to a frequency position corresponding to a lowest resource block of the bandwidth unit and a size of a resource block included in the bandwidth unit (where the size of the resource block included in the bandwidth unit may be understood as a bandwidth corresponding to the bandwidth unit). For another example, the frequency resource position may correspond to a frequency position corresponding to a highest resource block of the bandwidth unit and a size of a resource block included in the bandwidth unit (where the size of the resource block included in the bandwidth unit may be understood as a bandwidth corresponding to the bandwidth unit). For another example, the frequency resource position may correspond to a center frequency position of the bandwidth unit and a size of a resource block included in the bandwidth unit (where the size of the resource block included in the bandwidth unit may be understood as a bandwidth corresponding to the bandwidth unit). Herein, the frequency position corresponding to the lowest frequency resource block of the bandwidth unit may be understood as a resource block with a minimum resource block index corresponding to the bandwidth unit, and the frequency position corresponding to the highest frequency resource block of the bandwidth unit may be understood as a resource block with a maximum resource block index corresponding to the bandwidth unit.

In Embodiment 1, if a frequency resource position of the first bandwidth unit is different from a frequency resource position of the second bandwidth unit, and the first bandwidth unit and the second bandwidth unit correspond to a same bandwidth unit identifier, for example, correspond to a same BWP ID, a switching delay of a first terminal device switching from the first bandwidth unit to the second bandwidth unit is a first delay. In this case, it may be understood that the first bandwidth unit is correlated with the second bandwidth unit.

FIG. 4 is a schematic diagram of distribution of bandwidth units having different frequency resource positions in a system bandwidth according to an embodiment of this application. A plurality of frequency resource positions in FIG. 4 correspond to a same bandwidth unit identifier, for example, a BWP ID. Specifically, frequency resource position 1 to frequency resource position 4 correspond to BWP A. Frequency resources corresponding to different frequency resource positions corresponding to a same bandwidth unit identifier may or may not overlap. In

FIG. 4, a frequency resource corresponding to frequency resource position 3 partially overlaps a frequency resource corresponding to frequency resource position 2 and a frequency resource corresponding to frequency resource position 4. It may be understood that, in this case, regardless of a frequency resource position of a bandwidth unit, another configuration parameter corresponding to the bandwidth unit may remain unchanged.

In this embodiment of this application, a network device may configure, by using RRC signaling, a plurality of bandwidth units included in one BWP, where different bandwidth units have at least one different frequency parameter, and the different frequency parameter may include at least one of the following items:
(1) a center frequency corresponding to the bandwidth unit;
(2) a frequency bandwidth corresponding to the bandwidth unit, or
(3) an SCS corresponding to the bandwidth unit.

For example, in one manner, the network device may directly include, in BWP configuration information configured by using the RRC signaling, frequency resource position information corresponding to a BWP. For example, as shown in FIG. 5, the BWP configuration information configured by the network device includes four frequency resource positions: frequency resource position 1 to frequency resource position 4. During specific implementation, the frequency resource position (position) may be separately configured for a downlink BWP and an uplink BWP, or may be configured only for a downlink BWP, or may be configured only for an uplink BWP, or may be jointly configured for a downlink BWP and an uplink BWP. This is not specifically limited in this embodiment of this application. Separate configuration of BWP frequency resource position information is performed for the downlink BWP and the uplink BWP, and this can ensure configuration flexibility. When configuration is performed only for the downlink BWP, it is considered that if a base station is configured with a specific quantity of receive antennas, a receive antenna gain brought by the specific quantity of receive antennas can compensate for a loss, caused by channel bandwidth reduction, of a frequency domain selective scheduling gain for REDCAP UE. In this way, a switching delay in a conventional technology may be used for switching between uplink BWPs, so that processing performed by the REDCAP terminal device on the uplink BWP may be simplified. When configuration is jointly performed for the downlink BWP and the uplink BWP, a one-to-one correspondence between a frequency resource position corresponding to the downlink BWP and a frequency resource position corresponding to the uplink BWP may be configured. In this way, when the network device indicates the frequency resource position of the downlink BWP by using physical layer signaling, the first terminal device may determine the frequency resource position of the uplink BWP based on the one-to-one correspondence.

Optionally, the configuration for the DL BWP is used as an example. The network device may include a position indication corresponding to a BWP ID in a BWP-Downlink IE (as shown below). Further, the position indication may be included in bwp-Common, or may be included in bwp-Dedicated. The position may be associated with at least one of the following items corresponding to the position: an SCS, a BWP center frequency, or a BWP frequency resource position. The BWP frequency resource position includes at least one of the following items: a bandwidth of the BWP, a frequency resource start position of the BWP, or a frequency resource end position of the BWP. The same descriptions are also applicable to different position configurations for the UL BWP, and details are not described again. The position refers to the frequency resource position.

With reference to the foregoing descriptions, the BWP-Downlink information element may be expressed as follows.

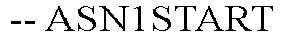

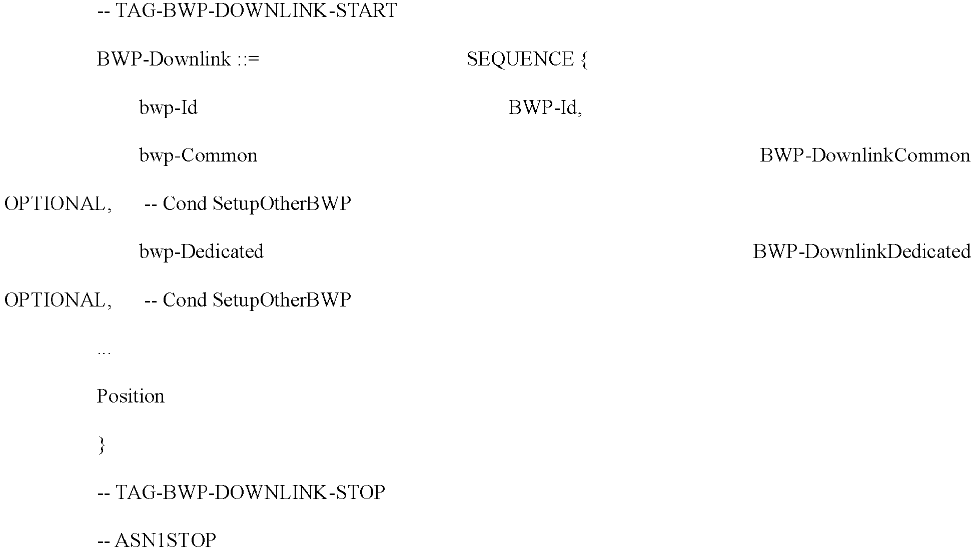

In this embodiment of this application, other configuration parameters of bandwidth units that have different frequency resource positions but have a same bandwidth identifier (a same BWP ID) may be the same. For example, the following configuration parameters are the same: a bandwidth size; a subcarrier spacing (subcarrier spacing, SCS); a corresponding quantity of multiple-input multiple-output (multiple input multiple output, MIMO) data transmission layers or antennas, or a corresponding physical downlink control channel (physical downlink control channel, PDCCH) configuration, a corresponding PDSCH configuration, a corresponding physical uplink control channel (physical uplink control channel, PUCCH) configuration, or a corresponding physical uplink shared channel (physical uplink shared channel, PUSCH) configuration.

The foregoing descriptions are provided by using an example in which the bandwidth unit is the BWP, and are also applicable when the bandwidth unit is another frequency resource.

In another aspect, if a frequency resource position of the first bandwidth unit is different from a frequency resource position of the second bandwidth unit, and the first bandwidth unit and the second bandwidth unit correspond to different bandwidth unit identifiers (for example, BWP IDs), a switching delay of a first terminal device switching from the first bandwidth unit to the second bandwidth unit is a second delay or a delay other than a first delay of N delays. In this case, it may be understood that the first bandwidth unit is not correlated with the second bandwidth unit.

In Embodiment 1, if the frequency resource position of the first bandwidth unit is different from the frequency resource position of the second bandwidth unit, and the first bandwidth unit and the second bandwidth unit correspond to the different bandwidth unit identifiers, for example, correspond to different BWP identifiers, the switching delay of the first terminal device switching from the first bandwidth unit to the second bandwidth unit is the delay, for example, may be the second delay, other than the first delay of the N delays. In this case, the first bandwidth unit may be understood as a first BWP, and the second bandwidth unit may be understood as a second BWP.

In the present invention, the network device indicates, by using physical layer signaling, the first terminal device to perform bandwidth unit switching. The physical layer signaling is downlink control information (downlink control information, DCI). A DCI format corresponding to the DCI may be, for example, DCI format 0-1, DCI format 1-1, DCI format 0-2, DCI format 1-2, or another DCI format that supports the bandwidth unit switching and that is introduced in a future communication system.

For example, the network device may send the downlink control information to the first terminal device, where the downlink control information indicates the first terminal device to switch from the first bandwidth unit to the second bandwidth unit. When receiving the downlink control information, the first terminal device may determine that the bandwidth unit switching needs to be performed. It should be noted that, in an implementation in which the downlink control information indicates the first terminal device to switch from the first bandwidth unit to the second bandwidth unit, the downlink control information indicates the second bandwidth unit to which the first terminal device switches. Optionally, the downlink control information may indicate the frequency resource position of the second bandwidth unit, a BWP ID corresponding to the second bandwidth unit, an index corresponding to the second bandwidth unit, or other information associated with the second bandwidth unit, for example, information associated with the frequency resource position. Optionally, the DCI further indicates a frequency domain resource occupied for receiving a PDSCH or sending a PUSCH by the first terminal device in the second bandwidth unit, where the frequency domain resource occupied by the PDSCH or the PUSCH is located in the second bandwidth unit. Optionally, the DCI further includes a second information field, where the second information field indicates the frequency domain resource occupied by the PDSCH or the PUSCH. Optionally, a first information field described below and the second information field are different information fields included in the DCI. Optionally, the first information field and the second information field may alternatively correspond to a same information field in the DCI. In the present invention, a frequency domain resource indication field (for example, a frequency domain resource assignment included in the DCI) included in the DCI is used to jointly indicate frequency resource allocation and indicate switching from the first bandwidth unit to the second bandwidth unit, or is used to jointly indicate frequency resource allocation and the second bandwidth unit that is after switching. For example, the first information field may correspond to the second information field.

The DCI may include the first information field, where the first information field corresponds to X bits, and a value of X is not limited. X is a positive integer greater than 0. Optionally, X is an integer not greater than 4. For example, when X = 4, there may be a maximum of 16 corresponding states. Assuming that when corresponding values of X bits are 0, it indicates that a bandwidth unit is not switched, switching to a maximum of 15 different bandwidth units may be further supported. In this way, signaling overheads may be further reduced while a frequency selective scheduling gain and/or cell load balancing are ensured as much as possible.

Optionally, a size of the first information field, for example, the value of X, may be configured by using RRC signaling, for example, may be configured as 1 bit, 2 bits, or 3 bits. In this way, the network device adjusts the size of the first information field, so that a most appropriate size design of the first information field may be ensured while the frequency selective scheduling gain and/or the cell load balancing are ensured, helping reduce DCI signaling overheads. Optionally, the value of the X bits may correspond to a total of 2^X states. Each of the 2^X states is configured by using the RRC signaling, in other words, indication information corresponding to each state is configured by using the RRC signaling.

The first information field may indicate a frequency resource position of a bandwidth unit that is after switching, or may indicate a bandwidth unit identifier of a bandwidth unit that is after switching, or may jointly indicate a frequency resource position and a bandwidth unit identifier of a bandwidth unit that is after switching.

Specifically, in a first implementation, the first information field may directly indicate the frequency resource position and the bandwidth unit identifier of the bandwidth unit that is after the switching. For example, the first information field may include frequency resource position information (for example, a bandwidth unit position) and BWP identification information (for example, a BWP ID). The frequency resource position information indicates the frequency resource position of the bandwidth unit that is after the switching. The BWP identification information indicates the bandwidth unit identifier of the bandwidth unit that is after the switching. It should be noted that the frequency resource position information herein corresponds to the frequency resource position information of the bandwidth unit, and does not correspond to a data transmission resource that is scheduled by a network device and that corresponds to transmitting, by a terminal device, a physical downlink channel and a physical uplink channel. The physical downlink channel includes a physical downlink control channel (physical downlink control channel, PDCCH) and a physical downlink shared channel (physical downlink shared channel, PDSCH). The physical uplink channel includes a physical uplink control channel (physical uplink control channel, PUCCH) and a physical uplink shared channel (physical uplink shared channel, PUSCH).

In a second implementation, the first information field may indicate only the frequency resource position of the bandwidth unit that is after the switching, and does not indicate the bandwidth unit identifier. In this case, the first information field may include frequency resource position information, and does not include BWP identification information.

For example, when the first information field includes the frequency resource position information, and it is assumed that the frequency resource position information includes 2 bits, four types of information may be indicated, where the four types of information may respectively correspond to four different frequency resource positions. For example, 00 corresponds to frequency resource position A, 01 corresponds to frequency resource position B, 10 corresponds to frequency resource position C, and 11 corresponds to frequency resource position D, where bandwidth units corresponding to the four different frequency resource positions may correspond to a same BWP identifier. In this way, signaling overheads can be reduced, helping improve transmission performance of a physical layer channel.

In this implementation, if the network device further configures, for the first terminal device, a bandwidth unit corresponding to only one frequency resource position (which is alternatively understood as configuring one BWP) in addition to a bandwidth unit corresponding to at least two frequency resource positions, for the bandwidth unit configured with only one frequency resource position, the frequency resource position of the bandwidth unit may be indicated by the first information field, so that the bandwidth unit is indicated. For example, frequency resource positions 1 to 3 correspond to bandwidth unit 1, and frequency resource position 4 corresponds to bandwidth unit 2. When the first information field indicates frequency resource position 4, the first information field may correspond to bandwidth unit 2.

In a third implementation, if the network device configures only one frequency resource position for each bandwidth unit (which may be understood as directly configuring a BWP), the first information field may include BWP identification information, and does not include frequency resource position information.

It should be noted that, optionally, a control information field for indicating switching between bandwidth units (for example, different frequency resource positions of a BWP) corresponding to a same BWP ID and having different frequency resource positions and a control information field for indicating switching between bandwidth units (for example, different BWPs) corresponding to different BWP IDs and having different frequency resource positions may correspond to a same information field (for example, a BWP indicator) in DCI, for example, a first information field for joint indication corresponds to the BWP indicator; or may correspond to different information fields, for example, a control information field for indicating switching between bandwidth units (for example, different frequency resource positions of a BWP) corresponding to a same BWP ID and having different frequency resource positions corresponds to a frequency resource position indication field (a non-frequency resource allocation field) in DCI, for example, may correspond to a control field newly added to the DCI or a redundant state field, to indicate that a control information field for indicating switching between bandwidth units (for example, different BWPs) corresponding to different BWP IDs and having different frequency resource positions is a BWP indicator field.

The configuration information of the first bandwidth unit and the configuration information of the second bandwidth unit (in an RRC signaling manner, where a plurality of bandwidth units may be configured in one BWP, and different bandwidth units have at least one different frequency parameter).

### Embodiment 2

In Embodiment 2, bandwidth unit configuration information sent by a network device may indicate a plurality of bandwidth units, and the plurality of bandwidth units include a first bandwidth unit and a second bandwidth unit. Both the first bandwidth unit and the second bandwidth unit correspond to a single identifier, and the identifier may be a BWP group identifier.

The first bandwidth unit and the second bandwidth unit correspond to different BWP group identifiers, the first bandwidth unit is correlated with the second bandwidth unit, and a switching delay of a first terminal device switching from the first bandwidth unit to the second bandwidth unit is a first delay.

Correspondingly, the first bandwidth unit and the second bandwidth unit correspond to different BWP group identifiers, the first bandwidth unit is not correlated with the second bandwidth unit, and a switching delay of a first terminal device switching from the first bandwidth unit to the second bandwidth unit is a second delay or a delay other than a first delay of N delays.

It should be noted that, in an implementation of the correlation, the first bandwidth unit and the second bandwidth unit are associated with a same identifier, for example, associated with a same set identifier (ID). Optionally, for example, when configuring a BWP by using RRC signaling, the network device may also configure a set identifier corresponding to the BWP, to indicate a set to which a bandwidth unit belongs. The set identifier may be separately configured for a downlink BWP for downlink data and an uplink BWP for uplink data transmission, or may be configured at the same time. The configuration for the DL BWP is used as an example. The network device may include a set identifier indication corresponding to a BWP ID in a BWP-Downlink IE (as shown below). Further, the set identifier indication may be included in bwp-Common, or may be included in bwp-Dedicated. The same descriptions are also applicable to a set identifier configuration for the UL BWP, and details are not described again. Alternatively, the set identifier may be replaced with another identifier reflecting the correlation, for example, the following delay identifier gap 1, and switching between bandwidth units having a same delay identifier is the first delay.

With reference to the foregoing descriptions, the BWP-Downlink information element may be expressed as follows.

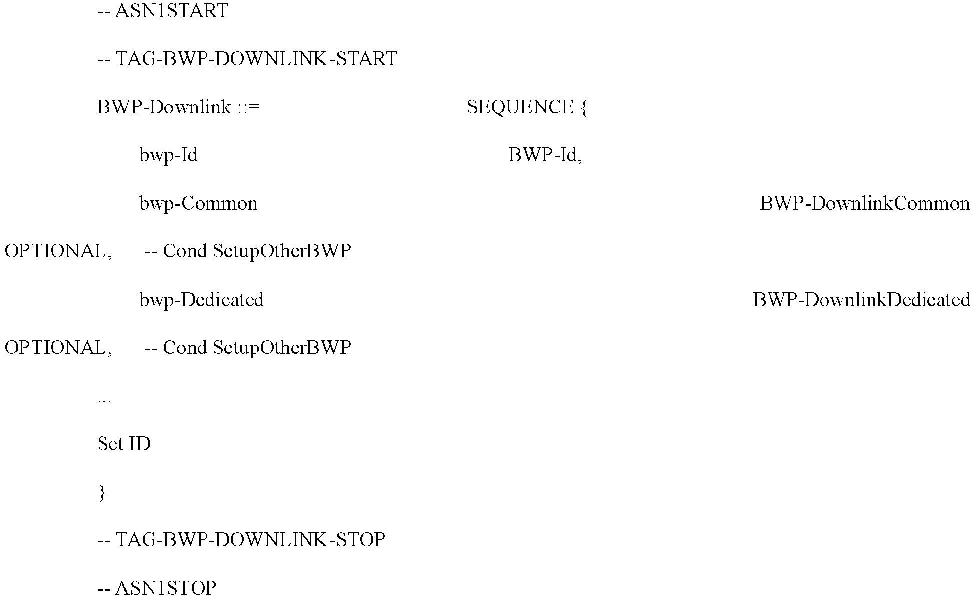

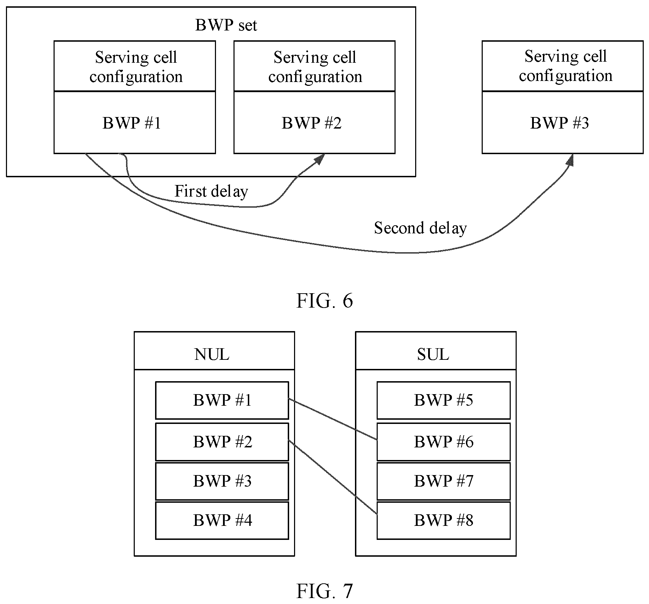

FIG. 6 shows an example of a specific implementation. In FIG. 6, an example in which a bandwidth unit is a BWP is used for description. It is assumed that BWP #1 and BWP #2 belong to a same BWP set, and are associated with a same identifier. BWP #3 does not belong to the BWP set corresponding to BWP #1 and BWP #2, and an identifier associated with BWP #3 is different from the identifier associated with BWP #1 or BWP #2, or BWP #3 may not be associated with any identifier. In this implementation, the network device may configure at least one BWP set, and the set includes at least two BWPs, that is, includes BWP #1 and BWP #2. Another BWP that is not included in the BWP set may not be grouped into a set.

With reference to the foregoing descriptions, in Embodiment 2, a switching delay of the first terminal device switching between bandwidth units associated with a same identifier is the first delay, and a switching delay of the first terminal device switching between bandwidth units associated with different identifiers is the delay other than the first delay of the N switching delays. For example, with reference to the foregoing example, a switching delay of the first terminal device switching between BWP #1 and BWP #2 is the first delay, and a switching delay of the first terminal device switching between BWP #1 and BWP #3 is a delay greater than the first delay, for example, the second delay, or the delay other than the first delay of the N delays.

It should be noted that, similar to that in Embodiment 1, in Embodiment 2, the network device may indicate, by using physical layer signaling, the first terminal device to perform bandwidth unit switching. The physical layer signaling may be DCI. A DCI format corresponding to the DCI may be, for example, DCI format 0-1, DCI format 1-1, DCI format 0-2, DCI format 1-2, or another DCI format that supports the bandwidth unit switching and that is introduced in a future communication system.

In Embodiment 2, the downlink control information may include a first information field, and the first information field may indicate a bandwidth unit identifier (namely, a BWP ID) of a bandwidth unit that is after switching. For details, refer to the descriptions in Embodiment 1, and the details are not described herein again.

Optionally, in Embodiment 2, a BWP switching field included in the DCI may be directly reused, to indicate the switching between the first bandwidth unit and the second bandwidth unit. A terminal device may determine, based on the BWP group identifier configured by using the RRC signaling, whether a switching delay between different bandwidth units (namely, different BWPs) is the first delay or the delay other than the first delay of the N delays.

### Embodiment 3

In Embodiment 3, bandwidth unit configuration information sent by a network device may indicate a plurality of bandwidth units, and the plurality of bandwidth units include a first bandwidth unit and a second bandwidth unit. It is assumed that the first bandwidth unit is a bandwidth unit on a first carrier, and the second bandwidth unit is a bandwidth unit on a second carrier.

When there is an association relationship between the first bandwidth unit and the second bandwidth unit, there is no correlation between the first bandwidth unit and the second bandwidth unit, and there is no association relationship between the first bandwidth unit and the second bandwidth unit.

With reference to the foregoing descriptions, in Embodiment 3, a switching delay of a first terminal device switching between bandwidth units that are associated is a first delay, and a switching delay of the first terminal device switching between bandwidth units that are not associated is a second delay or a delay other than the first delay of N switching delays.

Embodiment 3 may be applied to a second terminal device for which an NR uplink (NR uplink, NUL) carrier and a supplement uplink (supplement uplink, SUL) carrier are configured. In this scenario, the first carrier is the NUL carrier, and the second carrier is the SUL carrier, or the first carrier is the SUL carrier, and the second carrier is the NUL carrier. The SUL carrier may be used together with NR FDD or NR TDD frequency bands.

In Embodiment 3, a part of the plurality of bandwidth units indicated by the bandwidth unit configuration information sent by the network device are uplink bandwidth units, for example, the first bandwidth unit, on the NUL carrier, and a part of the plurality of bandwidth units are uplink bandwidth units, for example, the second bandwidth unit, on the SUL carrier.

When configuring the NUL carrier and the SUL carrier, the network device may configure an association relationship between the uplink bandwidth unit included in the NUL and the uplink bandwidth unit included in the SUL at the same time. For example, as shown in FIG. 7, an example in which a bandwidth unit is a BWP is used for description. In FIG. 7, an NUL carrier configured by the network device for the first terminal device includes four BWPs: BWP #1, BWP #2, BWP #3, and BWP #4. An SUL carrier configured by the network device for the first terminal device includes four BWPs: BWP #5, BWP #6, BWP #7, and BWP #8. There is an association relationship between BWP #1 and BWP #6, and there is an association relationship between BWP #2 and BWP #8.

For example, with reference to the foregoing example, a switching delay of the first terminal device switching between BWP #1 and BWP #6 is the first delay, and a switching delay of the first terminal device switching between BWP #2 and BWP #5 may be the second delay or the delay other than the first delay of the N delays.

It should be noted that, optionally, if a BWP ID corresponding to a bandwidth unit on an NUL is the same as a BWP ID corresponding to a bandwidth unit on an SUL, it may be understood that the bandwidth unit on the NUL and the bandwidth unit on the SUL are correlated. A switching delay between the bandwidth unit on the NUL and the bandwidth unit on the SUL that are correlated is the first delay; otherwise, the switching delay is the second delay or the delay other than the first delay of the N delays.

It should be noted that, similar to that in Embodiment 1, in Embodiment 3, the network device may indicate, by using physical layer signaling, the first terminal device to perform bandwidth unit switching. The physical layer signaling may be DCI. For details, refer to the descriptions in Embodiment 1, and the details are not described herein again.

Optionally, in this embodiment of this application, when the first bandwidth unit and the second bandwidth unit belong to different carriers, or when the first bandwidth unit and the second bandwidth unit correspond to a same BWP identifier (for example, a BWP ID), or when the first bandwidth unit is correlated with the second bandwidth unit, the switching delay corresponding to switching from the first bandwidth unit to the second bandwidth unit may be the first delay or a third delay. The third delay may be less than the second delay. The second delay may correspond to a switching delay of the second terminal device switching between bandwidth units under a same condition, or is another value. This is not specifically limited. The same condition herein may be understood as a corresponding switching delay of the second terminal device switching between bandwidth units on different carriers.

The foregoing Embodiment 1 to Embodiment 3 describe implementations of correlated bandwidth units. Embodiments of this application are not limited to the foregoing embodiments, and there may be another implementation. For example, when only a frequency-related parameter in the configuration information of the first bandwidth unit is different from that in the configuration information of the second bandwidth unit, the first bandwidth unit is correlated with the second bandwidth unit. The switching delay of the first terminal device switching from the first bandwidth unit to the second bandwidth unit is the first delay, and the frequency-related parameter includes at least one of the following items:
(1) a center frequency corresponding to the bandwidth unit;
(2) a frequency bandwidth corresponding to the bandwidth unit, or
(3) an SCS corresponding to the bandwidth unit.

For example, when a center frequency corresponding to the first bandwidth unit is different from a center frequency corresponding to the second bandwidth unit, and another configuration parameter of the first bandwidth unit is the same as another configuration parameter of the second bandwidth unit, the switching delay between the first bandwidth unit and the second bandwidth unit is the first delay. Switching between bandwidth units that do not meet the foregoing relationship is the delay other than the first delay of the N delays, and the delay may be, for example, the second delay.

The foregoing descriptions are merely an example, and another case is not described again.

It should be noted that, in embodiments of this application, one carrier may correspond to one cell, and different carriers correspond to different cells. The different carriers are associated with different frequency parameters. Herein, the frequency parameter associated with the carrier may include center frequency information of the carrier or frequency position information of the carrier.

It should be noted that, in embodiments of this application, data transmission includes uplink data transmission and downlink data transmission. A data transmission direction corresponding to the first bandwidth unit is the same as a data transmission direction corresponding to the second bandwidth unit. For example, both data carried in the first bandwidth unit and data carried in the second bandwidth unit are downlink data. For example, both the first bandwidth unit and the second bandwidth unit correspond to a downlink BWP. Alternatively, both data carried in the first bandwidth unit and data carried in the second bandwidth unit are uplink data. For example, both the first bandwidth unit and the second bandwidth unit correspond to an uplink BWP.

In embodiments of this application, the RRC signaling may be configured to configure a plurality of bandwidth units in one BWP, different bandwidth units have at least one different frequency parameter, and the frequency parameter includes at least one of the following items:
(1) a center frequency corresponding to the bandwidth unit;
(2) a frequency bandwidth corresponding to the bandwidth unit, or
(3) an SCS corresponding to the bandwidth unit.

In the present invention, at least one of the bandwidth units configured by the network device for the first terminal device includes a synchronization signal block (Synchronization Signal Block, SSB). The SSB may be a cell defined SSB (cell defined SSB, CD-SSB). An example in which a bandwidth unit is a BWP is used below for description.

When the bandwidth unit is the BWP, if one bandwidth unit configured by the network device for the first terminal device includes an SSB, there may be one or more SSBs, for example, the one or more SSBs may correspond to different beam directions. This is not specifically limited in this application. For example, one BWP includes an SSB. With reference to the foregoing implementation, if one BWP corresponds to at least two frequency resource positions, at least one of the at least two frequency resource positions includes the SSB.

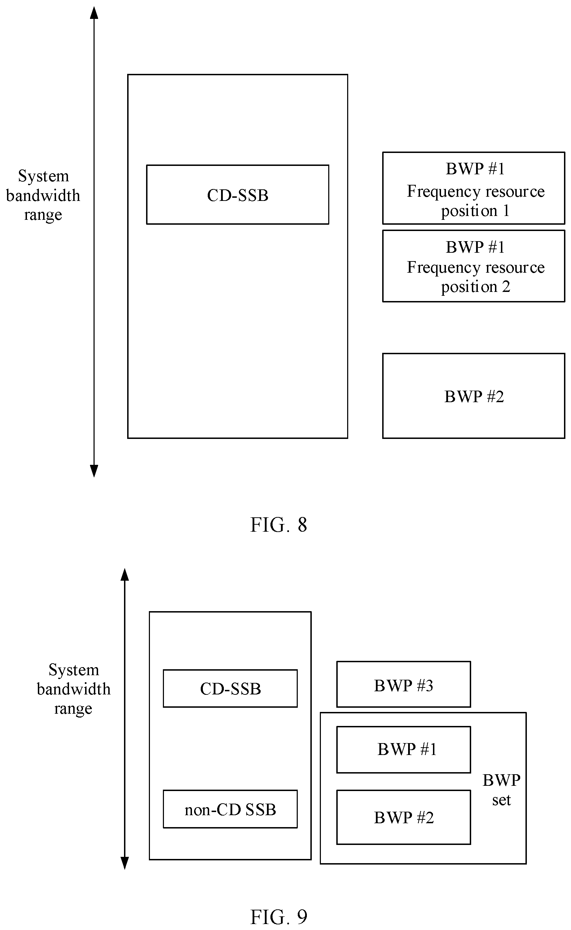

When the BWP configured by the network device for the first terminal device includes a BWP having at least two frequency resource positions and a BWP having only one frequency resource position, the BWP including the at least two frequency resource positions includes an SSB, or the BWP including only one frequency resource position includes an SSB. For example, as shown in FIG. 8, BWP #1 includes two frequency resource positions: frequency resource position 1 and frequency resource position 2. BWP #2 includes one frequency resource position: frequency resource position 3. In FIG. 8, an example in which a frequency resource corresponding to frequency resource position 1 includes a CD-SSB is used for description, and there may be another case.

When all BWPs configured by the network device for the first terminal device are BWPs having one frequency resource position, at least one BWP includes an SSB.

Further, optionally, a frequency resource corresponding to a BWP or a frequency resource position of a BWP that include an SSB or a CD-SSB in particular may have a smaller frequency resource bandwidth than a frequency resource corresponding to another BWP or another frequency resource position of a BWP that include no SSB. In this way, when there is no data transmission need, the first terminal device may camp on the frequency resource corresponding to the BWP or the frequency resource position that include the SSB. Because a bandwidth of the frequency resource corresponding to the BWP or the frequency resource position that include the SSB is smaller than a bandwidth of the frequency resource corresponding to the another BWP or the another frequency resource position, power consumption of the first terminal device may be reduced by using the foregoing design. In addition, the first terminal device may further perform radio resource management (radio resource management, RRM) measurement or radio link monitoring (radio link monitoring, RLM) measurement based on the SSB included in the BWP or the frequency resource, to ensure basic measurement performed on a serving cell.

In addition, to ensure the basic measurement performed by the first terminal device on the serving cell, at least one of the BWPs configured by the network device for the first terminal device includes a non-CD SSB. Further, optionally, it may be configured that a BWP including the non-CD SSB is correlated with at least one BWP, and a switching delay of the first terminal device switching to the BWP including the non-CD SSB may be the first delay. Same as above, herein, there may be one or more SSBs configured on the frequency resource corresponding to the BWP or the frequency resource position of the BWP, for example, the one or more SSBs may correspond to a plurality of different beam directions. This is not specifically limited in this application.

For example, as shown in FIG. 9, it is assumed that three BWPs are configured: BWP #1, BWP #2, and BWP #3. BWP #1 and BWP #2 that are configured belong to a BWP set, and BWP #3 does not belong to the BWP set. A BWP switching delay between BWP #1 and BWP #2 is a first delay, and a BWP switching delay between BWP #1 or BWP #2 and a BWP outside the set is greater than the first delay. In this case, compared with configuring a non-CD SSB on another BWP, in some scenarios, configuring the non-CD SSB for RRM/RLM on BWP #1 or BWP #2 may reduce a switching time period required by the first terminal device to perform RRM measurement or RLM measurement. For example, as shown in FIG. 9, it is assumed that the non-CD SSB is configured on BWP #2, and the first terminal device performs data transmission with the network device through BWP #1. At an RRM and/or RRM measurement moment, the first terminal device may quickly switch to BWP #2 based on the first delay, and perform RRM and/or RLM measurement through the non-CD SSB configured on BWP #2. After performing the measurement, the first terminal device may quickly switch back to BWP #1 based on the first delay, to perform data transmission with the network device. Because the first delay is short and is less than a second delay, a data transmission interruption time period is short. Further, a CD-SSB may be further configured on BWP #1 or BWP #3. In FIG. 9, an example in which the CD-SSB is configured on BWP #3 is used for description.

In another aspect, in a frequency bandwidth corresponding to a plurality of correlated BWPs or different frequency resource positions of BWPs, compared with configuring an SSB in a frequency bandwidth corresponding to each BWP or each frequency resource position of a BWP, only one BWP may be configured, or one or more SSBs may be included in a frequency bandwidth corresponding to one frequency resource position of a BWP, so that overheads of common reference signal configuration are reduced.

It should be noted that the foregoing reference signal may also be used for channel state information (channel state information, CSI) measurement in addition to the RRM and/or RLM measurement.

It should be noted that, in embodiments of this application, a length of the first delay may be a radio frequency (Radio Frequency, RF) retuning (retuning) time period or less than an RF retuning time period. The RF retuning time period is, for example, a time length corresponding to two OFDM symbols, or is not greater than 140 microseconds, and is specifically determined based on a capability of a terminal device.

With reference to the foregoing descriptions, to ensure data transmission performance of the first terminal device and load balancing on a system side, an objective of the method provided in this application is to enable a frequency resource corresponding to data transmission of the first terminal device to be in a larger frequency resource range, to adjust, with a smaller switching delay, a frequency resource range for the data transmission. It may be understood that, if the frequency resource used by the first terminal device for the data transmission is adjusted more quickly, a scheduling scheme, for example, a modulation and coding scheme (modulation coding scheme, MCS), used for the data transmission between the first terminal device and the network device may better match a channel state, so that a frequency selective scheduling gain and/or a frequency diversity gain may be obtained. Optionally, the network device may notify, by using first terminal device-specific signaling, the first terminal device of a maximum supported frequency hopping range of the frequency resource corresponding to the data transmission. For example, the network device may notify, by using RRC signaling, the first terminal device of a frequency position and a size of a virtual carrier or a transmission frequency band. Optionally, for example, after initially accessing the network device, the first terminal device learns of a system bandwidth on the network device side by using broadcast information sent by the network device, and may report a terminal type or a terminal capability of the first terminal device in a manner such as capability reporting. For example, the terminal type is a REDCAP terminal, and the terminal capability is that a transmission bandwidth of the first terminal device is 20 MHz. After learning of the capability information, the network device may notify the first terminal device of the frequency position and the size of the virtual carrier or a transmission bandwidth by using the first terminal device-specific signaling. The size of the virtual carrier or the transmission frequency band herein (where the size of the transmission frequency band may be understood as the transmission bandwidth) is greater than the bandwidth capability of the first terminal device. An actual transmission frequency band of the first terminal device is also configured at the same time. A bandwidth of the transmission frequency band is not greater than the bandwidth capability of the first terminal device. For example, the actual transmission frequency band may be configured by using a BWP or an initial BWP. The first terminal device may adjust an RF radio frequency position of the first terminal device based on the actual transmission frequency band, and then may complete BWP switching with a short BWP switching delay in an implementation of this application.

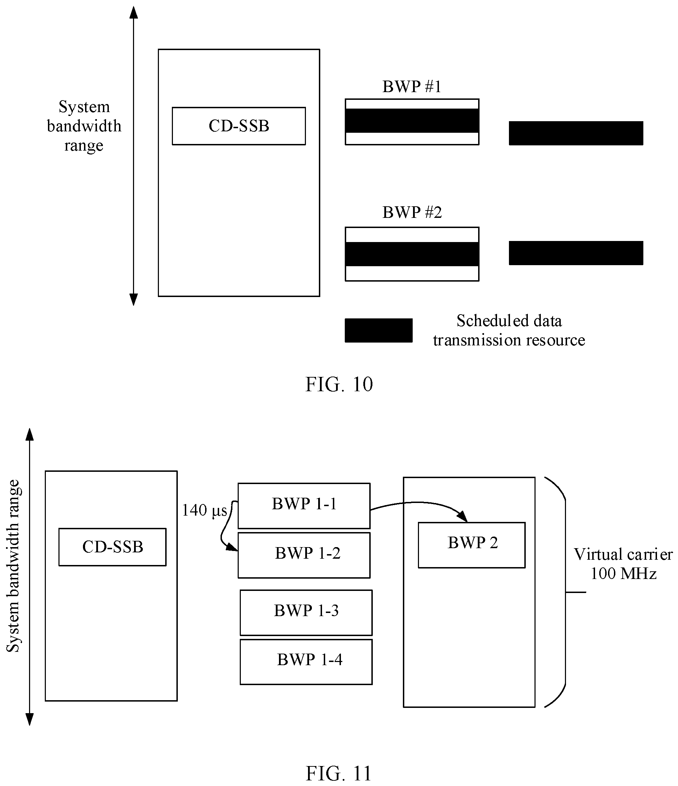

It should be noted that, in embodiments of this application, the data transmission between the network device and the first terminal device is performed on the actual transmission frequency band (namely, an actual transmission bandwidth unit) configured by the network device for the first terminal device or a transmission frequency band that is after frequency hopping, instead of starting at any position in a frequency resource range of a configured virtual carrier or transmission frequency band. For example, as shown in FIG. 10, two solutions are compared. Solution 1: An actual transmission bandwidth unit in which a data transmission resource is located is first determined, where the bandwidth unit is a grouped resource, and resource scheduling is implemented in the grouped resource (for example, the resource scheduling is implemented in the bandwidth unit).

Solution 2: A scheduled data transmission resource in a virtual carrier is directly indicated.

With reference to FIG. 10, as shown in the following Table 6, when data resource allocation manners are respectively resource allocation type 0 (resource allocation type 0, RA type 0) and resource allocation type 1 (resource allocation type 1, RA type 1), physical layer resource indication overheads (measured by a quantity of bits) corresponding to data transmission scheduling on an actual transmission frequency band or a transmission frequency band (using a BWP as an example, refer to the third column of the table) that is after frequency hopping and data transmission scheduling on a virtual carrier or a transmission frequency band (using 100 MHz as an example, refer to the fourth column of the table) are compared.

**Table 6**

| | | 25 MHz/65 RBs per BWP | 100 MHz/273 RBs |
|---|---|---|---|
| RA type 0 | Scheduling granularity (RBG) | 4 or 8 RBs per RBG | 16 RBs per RBG |
| | Physical indication (Bit) | 2 + {17 or 9} | 18 |
| RA type 1 | Scheduling granularity (RGB) | 1 RB per RBG | |
| | Physical indication (Bit) | 2 + 13 | 17 |

Based on Table 6, it can be learned that bit overheads are fewer when data transmission is performed on the actual transmission frequency band or the transmission frequency band that is after the frequency hopping.

According to embodiments of this application, the first terminal device may implement bandwidth unit switching with a shorter delay, and further, may implement the bandwidth unit switching with the shorter delay within a frequency range greater than the bandwidth capability of the first terminal device. For example, the bandwidth capability of the first terminal device is 20 MHz or another value not greater than 50 MHz. According to embodiments of this application, the first terminal device may implement dynamic bandwidth unit switching within a larger frequency range, for example, a 100 MHz frequency resource range. The 100 MHz frequency resource range may be considered as a virtual carrier because a carrier bandwidth of the virtual carrier exceeds the bandwidth capability of the first terminal device. For example, the first bandwidth unit and the second bandwidth unit are BWPs, and the bandwidth unit identifier is a BWP identifier. As shown in FIG. 11, BWP 1 includes four frequency resource positions, and each frequency resource position may be considered as one sub-BWP, which is represented as BWP 1-1 to BWP 1-4. When the first terminal device switches between BWP 1-1 to BWP 1-4, a switching delay is the first delay. For example, the first delay is 140 µs (it is assumed that only an RF retuning time period is considered). A parameter of any sub-BWP of BWP 1-1 to BWP 1-4 and that of BWP 2 are independently configured. When the first terminal device switches from the any sub-BWP of BWP 1-1 to BWP 1-4 to BWP 2, a switching delay is greater than the first delay, or may be a switching delay in an existing NR system, namely, 1 ms to 2.5 ms (corresponding to a case of switching delay type 1). In this manner, different BWPs correspond to a same BWP ID. Therefore, it may also be understood that hierarchical BWP transmission is implemented on the virtual carrier.

The foregoing embodiments of this application describe the method provided in embodiments of this application from a perspective of interaction between the first terminal device and the network device. To implement the functions in the method provided in embodiments of this application, the network device and the terminal device each may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

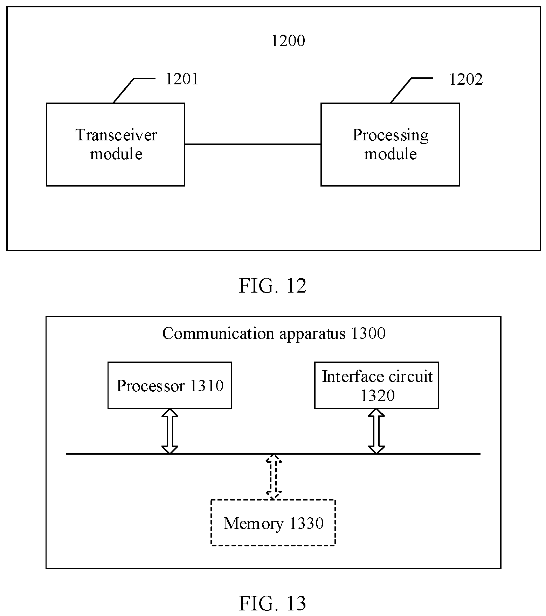

FIG. 12 and FIG. 13 are schematic diagrams of structures of possible communication apparatuses according to embodiments of this application. The communication apparatus may implement the functions of the first terminal device or the network device in the foregoing method embodiments, and therefore may also achieve the beneficial effects of the foregoing method embodiments. In embodiments of this application, the communication apparatus may be the terminal device 102 shown in FIG. 1, the network device 101 shown in FIG. 1, or a module (for example, a chip) applied to a terminal device or a network device.

As shown in FIG. 12, a communication apparatus 1200 includes a transceiver module 1201 and a processing module 1202. The communication apparatus 1200 may be configured to implement the functions of the first terminal device or the network device in the method embodiment shown in FIG. 2.

When the communication apparatus 1200 is configured to implement the functions of the first terminal device in the method embodiment in FIG. 2, the transceiver module 1201 is configured to receive bandwidth unit configuration information, where the bandwidth unit configuration information includes configuration information of a first bandwidth unit and configuration information of a second bandwidth unit; and the processing module 1202 is configured to determine to switch from the first bandwidth unit to the second bandwidth unit. A switching delay of the first terminal device switching from the first bandwidth unit to the second bandwidth unit is a first delay, the first delay is less than a second delay, and the second delay is a switching delay supported by a second terminal device. Alternatively, a switching delay of the first terminal device switching from the first bandwidth unit to the second bandwidth unit is one of N delays, the N delays are switching delays supported by the first terminal device, N is an integer greater than or equal to 2, and the N delays include a first delay.

When the communication apparatus 1200 is configured to implement the functions of the network device in the method embodiment in FIG. 2, the transceiver module 1201 is configured to send bandwidth unit configuration information to a first terminal device, where the bandwidth unit configuration information includes configuration information of a first bandwidth unit and configuration information of a second bandwidth unit; and the processing module 1202 is configured to schedule data of the first terminal device based on a switching delay. The switching delay is a delay of the first terminal device switching from the first bandwidth unit to the second bandwidth unit, the switching delay is a first delay, the first delay is less than a second delay, and the second delay is a switching delay supported by a second terminal device. Alternatively, the switching delay is one of N delays, the N delays are switching delays supported by the first terminal device, N is an integer greater than or equal to 2, and the N delays include a first delay.

For more detailed descriptions of the transceiver module 1201 and the processing module 1202, refer to the related descriptions in the foregoing method embodiments. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, input data required for running instructions by the processor 1310, or data generated after the processor 1310 runs instructions.

When the communication apparatus 1300 is configured to implement the method in the foregoing method embodiments, the processor 1310 is configured to perform the functions of the processing module 1202, and the interface circuit 1320 is configured to perform the functions of the transceiver module 1201.

When the communication apparatus is a chip applied to a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip applied to a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in an access network device or a terminal device. Certainly, the processor and the storage medium may alternatively exist as discrete components in the access network device or the terminal device.

All or a part of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a dedicated computer, a computer network, or another programmable apparatus. The computer programs or the instructions may be stored in a computer-readable storage medium, or may be transmitted through a computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid-state drive, SSD).

In embodiments of this application, unless there is a particular description or a logical conflict, terms and/or descriptions in different embodiments are consistent and may be mutually referenced. Technical features in the different embodiments may be combined based on their internal logical relationship, to form a new embodiment.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

## Claims

1. **A switching** method performed by a first terminal device, the first terminal device being a New Radio, NR, reduced capability, NR REDCAP, terminal device, wherein the method comprises the steps of:
• receiving (step 202) bandwidth unit configuration information from a network device, wherein the bandwidth unit configuration information comprises configuration information of a first bandwidth unit and configuration information of a second bandwidth unit, wherein at least one of the first bandwidth unit and the second bandwidth unit comprises a synchronization signal block, SSB;
• receiving downlink control information from the network device, wherein the downlink control information comprises a frequency domain resource indication field used to jointly indicate a frequency resource allocation and an indication to switch from the first bandwidth unit to the second bandwidth unit, wherein the frequency resource allocation indicates a frequency domain resource within the second bandwidth unit for the physical downlink shared channel, PDSCH, or the physical uplink shared channel, PUSCH;
• determining (step 203), based on the configuration information of the first bandwidth unit and the configuration information of the second bandwidth unit, a frequency resource position of the first bandwidth unit and a frequency resource position of the second bandwidth unit;
• determining to switch from the first bandwidth unit to the second bandwidth unit based on the received indication to switch from the first bandwidth unit to the second bandwidth unit, wherein a switching delay of the first terminal device switching from the first bandwidth unit to the second bandwidth unit is:
∘ a first delay, the first delay is less than a second delay, and the second delay is a switching delay supported by a second terminal device, the second terminal device being a legacy terminal device in a NR system, or,
∘ a switching delay of the first terminal device switching from the first bandwidth unit to the second bandwidth unit and is one of N delays, the N delays are switching delays supported by the first terminal device, N is an integer greater than or equal to 2, and the N delays comprise the first delay;
• switching from the frequency resource position of the first bandwidth unit to the frequency resource position of the second bandwidth unit, thereby switching from the first bandwidth unit to the second bandwidth unit, the switching lasting the switching delay;
• after having switched from the first bandwidth unit to the second bandwidth unit, either receiving data from the network device on the frequency domain resource of the PDSCH within the second bandwidth unit as indicated by the received frequency resource allocation or transmitting data to the network device on the frequency domain resource of the PUSCH within the second bandwidth unit as indicated by the received frequency resource allocation.

2. The method according to claim 1, wherein the frequency resource position of the first bandwidth unit is different from the frequency resource position of the second bandwidth unit, the first bandwidth unit and the second bandwidth unit correspond to a same bandwidth part, BWP, identifier, and the switching delay of the first terminal device switching from the first bandwidth unit to the second bandwidth unit is the first delay.

3. The method according to claim 1, wherein the frequency resource position of the first bandwidth unit is different from the frequency resource position of the second bandwidth unit, the first bandwidth unit and the second bandwidth unit correspond to different BWP identifiers, and the switching delay of the first terminal device switching from the first bandwidth unit to the second bandwidth unit is a delay other than the first delay of the N delays.

4. The method according to claim 1, wherein the first bandwidth unit and the second bandwidth unit correspond to different BWP identifiers, the first bandwidth unit is correlated with the second bandwidth unit, and the switching delay of the first terminal device switching from the first bandwidth unit to the second bandwidth unit is the first delay.

5. The method according to claim 1, wherein the first bandwidth unit and the second bandwidth unit correspond to different BWP identifiers, the first bandwidth unit is not correlated with the second bandwidth unit, and the switching delay of the first terminal device switching from the first bandwidth unit to the second bandwidth unit is a delay other than the first delay of the N delays.

6. The method according to claim 4 or 5, wherein when an identifier associated with **the first** bandwidth unit is the same as an identifier associated with the second bandwidth unit, the first bandwidth unit is correlated with the second bandwidth unit.

7. The method according to any one of claims 1 to 6, wherein the first bandwidth unit is a bandwidth unit on a first carrier, and the second bandwidth unit is a bandwidth unit on a second carrier.

8. A switching method performed by a network device, the method comprising the steps of:
• sending (step 201) bandwidth unit configuration information to a first terminal device being a New Radio, NR, reduced capability, NR REDCAP, terminal device, wherein the bandwidth unit configuration information comprises configuration information of a first bandwidth unit and configuration information of a second bandwidth unit, wherein at least one of the first bandwidth unit and the second bandwidth unit comprises a synchronization signal block, SSB;
• sending downlink control information to the first terminal device, wherein the downlink control information comprises a frequency domain resource indication field used to jointly indicate a frequency resource allocation and an indication to switch from the first bandwidth unit to the second bandwidth unit, wherein the frequency resource allocation indicates a frequency domain resource within the second bandwidth unit for the physical downlink shared channel, PDSCH, or the physical uplink shared channel, PUSCH;
• scheduling (step 204) data of the first terminal device based on a switching delay, wherein the switching delay is a delay of the first terminal device switching from the first bandwidth unit to the second bandwidth unit, the switching delay is:
∘ a first delay, the first delay is less than a second delay, and the second delay is a switching delay supported by a second terminal device, the second terminal device being a legacy terminal device in a NR system, or,
∘ a switching delay of the first terminal device switching from the first bandwidth unit to the second bandwidth unit and is one of N delays, the N delays are switching delays supported by the first terminal device, N is an integer greater than or equal to 2, and the N delays comprise the first delay;
• either sending the scheduled data to the first terminal device on the frequency domain resource of the PDSCH within the second bandwidth unit as indicated by the sent frequency resource allocation or receiving the scheduled data from the first terminal device on the frequency domain resource of the PUSCH within the second bandwidth unit as indicated by the sent frequency resource allocation.

9. The method according to claim 8, wherein a frequency resource position of the first bandwidth unit is different from a frequency resource position of the second bandwidth unit, the first bandwidth unit and the second bandwidth unit correspond to a same bandwidth part, BWP, identifier, and the switching delay is the first delay.

10. The method according to claim 8, wherein a frequency resource position of the first bandwidth unit is different from a frequency resource position of the second bandwidth unit, the first bandwidth unit and the second bandwidth unit correspond to different BWP identifiers, and the switching delay is a delay other than the first delay of the N delays.

11. A first terminal device, the first terminal device being a New Radio, NR, reduced capability, NR REDCAP, terminal device, wherein the first terminal device is configured to perform any of the methods according to claims 1 - 7.

12. A network device configured to perform any of the methods according to claims 8 - 10.

## Patentansprüche

1. Umschaltverfahren, das durch ein erstes Endgerät durchgeführt wird, wobei das erste Endgerät ein New Radio(NR)-Endgerät mit reduziertem Funktionsumfang (NR-REDCAP) ist, wobei das Verfahren die folgenden Schritte umfasst:
• Empfangen (Schritt 202) von Bandbreiteneinheitskonfigurationsinformationen von einer Netzwerkvorrichtung, wobei die Bandbreiteneinheitskonfigurationsinformationen Konfigurationsinformationen einer ersten Bandbreiteneinheit und Konfigurationsinformationen einer zweiten Bandbreiteneinheit umfassen, wobei mindestens eine von der ersten Bandbreiteneinheit und der zweiten Bandbreiteneinheit einen Synchronisationssignalblock (SSB) umfasst;
• Empfangen von Downlink-Steuerinformationen von der Netzwerkvorrichtung, wobei die Downlink-Steuerinformationen ein Frequenzdomänenressourcen-Anzeigefeld umfassen, das dazu verwendet wird, gemeinsam eine Frequenzressourcenzuweisung und eine Anzeige, von der ersten Bandbreiteneinheit auf die zweite Bandbreiteneinheit umzuschalten, anzuzeigen, wobei die Frequenzressourcenzuweisung eine Frequenzdomänenressource innerhalb der zweiten Bandbreiteneinheit für den Physical Downlink Shared Channel (PDSCH) oder den Physical Uplink Shared Channel (PUSCH) anzeigt;
• Bestimmen (Schritt 203) einer Frequenzressourcenposition der ersten Bandbreiteneinheit und einer Frequenzressourcenposition der zweiten Bandbreiteneinheit basierend auf den Konfigurationsinformationen der ersten Bandbreiteneinheit und den Konfigurationsinformationen der zweiten Bandbreiteneinheit;
• Bestimmen, von der ersten Bandbreiteneinheit auf die zweite Bandbreiteneinheit umzuschalten, basierend auf der empfangenen Anzeige, von der ersten Bandbreiteneinheit auf die zweite Bandbreiteneinheit umzuschalten, wobei eine Umschaltverzögerung des ersten Endgeräts, von der ersten Bandbreiteneinheit auf die zweite Bandbreiteneinheit umzuschalten, Folgendes ist:
○ eine erste Verzögerung, wobei die erste Verzögerung kleiner als eine zweite Verzögerung ist, und die zweite Verzögerung eine durch ein zweites Endgerät unterstützte Umschaltverzögerung ist, wobei das zweite Endgerät ein Legacy-Endgerät in einem NR-System ist, oder
○ eine Umschaltverzögerung des von der ersten Bandbreiteneinheit auf die zweite Bandbreiteneinheit umschaltenden ersten Endgeräts und eine von N Verzögerungen, wobei die N Verzögerungen durch das erste Endgerät unterstützte Umschaltverzögerungen sind, N eine ganze Zahl größer als oder gleich 2 ist und die N Verzögerungen die erste Verzögerung umfassen;
• Umschalten von der Frequenzressourcenposition der ersten Bandbreiteneinheit auf die Frequenzressourcenposition der zweiten Bandbreiteneinheit, wodurch von der ersten Bandbreiteneinheit auf die zweite Bandbreiteneinheit umgeschaltet wird, wobei das Umschalten die Umschaltverzögerung andauert;
• nach dem Umschalten von der ersten Bandbreiteneinheit auf die zweite Bandbreiteneinheit, entweder Empfangen von Daten von der Netzwerkvorrichtung auf der Frequenzdomänenressource des PDSCH innerhalb der zweiten Bandbreiteneinheit, wie durch die empfangene Frequenzressourcenzuweisung angezeigt, oder Übertragen von Daten an die Netzwerkvorrichtung auf der Frequenzdomänenressource des PUSCH innerhalb der zweiten Bandbreiteneinheit, wie durch die empfangene Frequenzressourcenzuweisung angezeigt.

2. Verfahren nach Anspruch 1, wobei sich die Frequenzressourcenposition der ersten Bandbreiteneinheit von der Frequenzressourcenposition der zweiten Bandbreiteneinheit unterscheidet, die erste Bandbreiteneinheit und die zweite Bandbreiteneinheit einer gleichen Bandbreitenteil(BWP)-Kennung entsprechen und die Umschaltverzögerung des ersten Endgeräts, das von der ersten Bandbreiteneinheit auf die zweite Bandbreiteneinheit umschaltet, die erste Verzögerung ist.

3. Verfahren nach Anspruch 1, wobei sich die Frequenzressourcenposition der ersten Bandbreiteneinheit von der Frequenzressourcenposition der zweiten Bandbreiteneinheit unterscheidet, die erste Bandbreiteneinheit und die zweite Bandbreiteneinheit unterschiedlichen BWP-Kennungen entsprechen und die Umschaltverzögerung des ersten Endgeräts, das von der ersten Bandbreiteneinheit auf die zweite Bandbreiteneinheit umschaltet, eine andere Verzögerung als die erste Verzögerung der N Verzögerungen ist.

4. Verfahren nach Anspruch 1, wobei die erste Bandbreiteneinheit und die zweite Bandbreiteneinheit unterschiedlichen BWP-Kennungen entsprechen, die erste Bandbreiteneinheit mit der zweiten Bandbreiteneinheit korreliert ist und die Umschaltverzögerung des ersten Endgeräts, das von der ersten Bandbreiteneinheit auf die zweite Bandbreiteneinheit umschaltet, die erste Verzögerung ist.

5. Verfahren nach Anspruch 1, wobei die erste Bandbreiteneinheit und die zweite Bandbreiteneinheit unterschiedlichen BWP-Kennungen entsprechen, die erste Bandbreiteneinheit nicht mit der zweiten Bandbreiteneinheit korreliert ist und die Umschaltverzögerung des ersten Endgeräts, das von der ersten Bandbreiteneinheit auf die zweite Bandbreiteneinheit umschaltet, eine andere Verzögerung als die erste Verzögerung der N Verzögerungen ist.

6. Verfahren nach Anspruch 4 oder 5, wobei, wenn eine der ersten Bandbreiteneinheit zugeordnete Kennung gleich einer der zweiten Bandbreiteneinheit zugeordneten Kennung ist, die erste Bandbreiteneinheit mit der zweiten Bandbreiteneinheit korreliert ist.

7. Verfahren nach einem der Ansprüche 1 bis 6, wobei die erste Bandbreiteneinheit eine Bandbreiteneinheit auf einem ersten Träger ist und die zweite Bandbreiteneinheit eine Bandbreiteneinheit auf einem zweiten Träger ist.

8. Umschaltverfahren, das durch eine Netzwerkvorrichtung durchgeführt wird, wobei das Verfahren die folgenden Schritte umfasst:
• Senden (Schritt 201) von Bandbreiteneinheitskonfigurationsinformationen an ein erstes Endgerät, das ein New Radio(NR)-Endgerät mit reduziertem Funktionsumfang (NR-REDCAP) ist, wobei die Bandbreiteneinheitskonfigurationsinformationen Konfigurationsinformationen einer ersten Bandbreiteneinheit und Konfigurationsinformationen einer zweiten Bandbreiteneinheit umfassen, wobei mindestens eine von der ersten Bandbreiteneinheit und der zweiten Bandbreiteneinheit einen Synchronisationssignalblock (SSB) umfasst;
• Senden von Downlink-Steuerinformationen an das Endgerät, wobei die Downlink-Steuerinformationen ein Frequenzdomänenressourcen-Anzeigefeld umfassen, das dazu verwendet wird, gemeinsam eine Frequenzressourcenzuweisung und eine Anzeige, von der ersten Bandbreiteneinheit auf die zweite Bandbreiteneinheit umzuschalten, anzuzeigen, wobei die Frequenzressourcenzuweisung eine Frequenzdomänenressource innerhalb der zweiten Bandbreiteneinheit für den Physical Downlink Shared Channel (PDSCH) oder den Physical Uplink Shared Channel (PUSCH) anzeigt;
• Planen (Schritt 204) von Daten des ersten Endgeräts basierend auf einer Umschaltverzögerung, wobei die Umschaltverzögerung eine Verzögerung des ersten Endgeräts, das von der ersten Bandbreiteneinheit auf die zweite Bandbreiteneinheit umschaltet, ist, wobei die Umschaltverzögerung Folgendes ist:
○ eine erste Verzögerung, wobei die erste Verzögerung kleiner als eine zweite Verzögerung ist, und die zweite Verzögerung eine durch ein zweites Endgerät unterstützte Umschaltverzögerung ist, wobei das zweite Endgerät ein Legacy-Endgerät in einem NR-System ist, oder
○ eine Umschaltverzögerung des von der ersten Bandbreiteneinheit auf die zweite Bandbreiteneinheit umschaltenden ersten Endgeräts und eine von N Verzögerungen, wobei die N Verzögerungen durch das erste Endgerät unterstützte Umschaltverzögerungen sind, N eine ganze Zahl größer als oder gleich 2 ist und die N Verzögerungen die erste Verzögerung umfassen;
• entweder Senden der geplanten Daten an das erste Endgerät auf der Frequenzdomänenressource des PDSCH innerhalb der zweiten Bandbreiteneinheit, wie durch die gesendete Frequenzressourcenzuweisung angezeigt, oder Empfangen der geplanten Daten von dem ersten Endgerät auf der Frequenzdomänenressource des PUSCH innerhalb der zweiten Bandbreiteneinheit, wie durch die gesendete Frequenzressourcenzuweisung angezeigt.

9. Verfahren nach Anspruch 8, wobei sich eine Frequenzressourcenposition der ersten Bandbreiteneinheit von einer Frequenzressourcenposition der zweiten Bandbreiteneinheit unterscheidet, die erste Bandbreiteneinheit und die zweite Bandbreiteneinheit einer gleichen Bandbreitenteil(BWP)-Kennung entsprechen und die Umschaltverzögerung die erste Verzögerung ist.

10. Verfahren nach Anspruch 8, wobei sich eine Frequenzressourcenposition der ersten Bandbreiteneinheit von einer Frequenzressourcenposition der zweiten Bandbreiteneinheit unterscheidet, die erste Bandbreiteneinheit und die zweite Bandbreiteneinheit unterschiedlichen BWP-Kennungen entsprechen und die Umschaltverzögerung eine andere Verzögerung als die erste Verzögerung der N Verzögerungen ist.

11. Erstes Endgerät, wobei das erste Endgerät ein New Radio(NR)-Endgerät mit reduziertem Funktionsumfang (NR-REDCAP) ist, wobei das erste Endgerät konfiguriert ist, um eines der Verfahren nach den Ansprüchen 1 bis 7 durchzuführen.

12. Netzwerkvorrichtung, die konfiguriert ist, um eines der Verfahren nach den Ansprüchen 8 bis 10 durchzuführen.

## Revendications

1. Procédé de commutation effectué par un premier dispositif terminal, le premier dispositif terminal étant un dispositif terminal de nouvelle radio, NR, à capacité réduite, NR REDCAP, dans lequel le procédé comprend les étapes consistant à :
• recevoir (étape 202) des informations de configuration d'unité de largeur de bande en provenance d'un dispositif de réseau, dans lequel les informations de configuration d'unité de largeur de bande comprennent des informations de configuration d'une première unité de largeur de bande et des informations de configuration d'une seconde unité de largeur de bande, dans lequel au moins l'une parmi la première unité de largeur de bande et la seconde unité de largeur de bande comprend un bloc de signal de synchronisation, SSB ;
• recevoir des informations de commande de liaison descendante en provenance du dispositif de réseau, dans lequel les informations de commande de liaison descendante comprennent un champ d'indication de ressource de domaine de fréquence utilisé pour indiquer conjointement une attribution de ressource de fréquence et une indication de commutation de la première unité de largeur de bande à la seconde unité de largeur de bande, dans lequel l'attribution de ressource de fréquence indique une ressource de domaine de fréquence au sein de la seconde unité de largeur de bande pour le canal partagé de liaison descendante physique, PDSCH, ou le canal partagé de liaison montante physique, PUSCH ;
• déterminer (étape 203), en fonction des informations de configuration de la première unité de largeur de bande et des informations de configuration de la seconde unité de largeur de bande, une position de ressource de fréquence de la première unité de largeur de bande et une position de ressource de fréquence de la seconde unité de largeur de bande ;
• déterminer de commuter de la première unité de largeur de bande à la seconde unité de largeur de bande en fonction de l'indication reçue de commuter de la première unité de largeur de bande à la seconde unité de largeur de bande, dans lequel un retard de commutation du premier dispositif terminal commutant de la première unité de largeur de bande à la seconde unité de largeur de bande est :
∘ un premier retard, le premier retard est inférieur à un second retard, et le second retard est un retard de commutation pris en charge par un second dispositif terminal, le second dispositif terminal étant un dispositif terminal existant dans un système NR, ou,
∘ un retard de commutation du premier dispositif terminal commutant de la première unité de largeur de bande à la seconde unité de largeur de bande et est l'un parmi N retards, les N retards sont des retards de commutation pris en charge par le premier dispositif terminal, N est un entier supérieur ou égal à 2, et les N retards comprennent le premier retard ;
• commuter de la position de ressource de fréquence de la première unité de largeur de bande à la position de ressource de fréquence de la seconde unité de largeur de bande, commutant ainsi de la première unité de largeur de bande à la seconde unité de largeur de bande, la commutation ayant la durée du retard de commutation ;
• après avoir commuté de la première unité de largeur de bande à la seconde unité de largeur de bande, soit recevoir des données en provenance du dispositif de réseau sur la ressource de domaine de fréquence du PDSCH au sein de la seconde unité de largeur de bande comme indiqué par l'attribution de ressource de fréquence reçue, soit transmettre des données au dispositif de réseau sur la ressource de domaine de fréquence du PUSCH au sein de la seconde unité de largeur de bande comme indiqué par l'attribution de ressource de fréquence reçue.

2. Procédé selon la revendication 1, dans lequel la position de ressource de fréquence de la première unité de largeur de bande est différente de la position de ressource de fréquence de la seconde unité de largeur de bande, la première unité de largeur de bande et la seconde unité de largeur de bande correspondent à un même identifiant de partie de largeur de bande, BWP, et le retard de commutation du premier dispositif terminal commutant de la première unité de largeur de bande à la seconde unité de largeur de bande est le premier retard.

3. Procédé selon la revendication 1, dans lequel la position de ressource de fréquence de la première unité de largeur de bande est différente de la position de ressource de fréquence de la seconde unité de largeur de bande, la première unité de largeur de bande et la seconde unité de largeur de bande correspondent à des identifiants BWP différents, et le retard de commutation du premier dispositif terminal commutant de la première unité de largeur de bande à la seconde unité de largeur de bande est un retard autre que le premier retard des N retards.

4. Procédé selon la revendication 1, dans lequel la première unité de largeur de bande et la seconde unité de largeur de bande correspondent à des identifiants BWP différents, la première unité de largeur de bande est corrélée à la seconde unité de largeur de bande, et le retard de commutation du premier dispositif terminal commutant de la première unité de largeur de bande à la seconde unité de largeur de bande est le premier retard.

5. Procédé selon la revendication 1, dans lequel la première unité de largeur de bande et la seconde unité de largeur de bande correspondent à des identifiants BWP différents, la première unité de largeur de bande n'est pas corrélée à la seconde unité de largeur de bande, et le retard de commutation du premier dispositif terminal commutant de la première unité de largeur de bande à la seconde unité de largeur de bande est un retard autre que le premier retard des N retards.

6. Procédé selon la revendication 4 ou 5, dans lequel, lorsqu'un identifiant associé à la première unité de largeur de bande est le même qu'un identifiant associé à la seconde unité de largeur de bande, la première unité de largeur de bande est corrélée à la seconde unité de largeur de bande.

7. Procédé selon l'une quelconque des revendications 1 à 6, dans lequel la première unité de largeur de bande est une unité de largeur de bande sur une première porteuse, et la seconde unité de largeur de bande est une unité de largeur de bande sur une seconde porteuse.

8. Procédé de commutation effectué par un dispositif de réseau, le procédé comprenant les étapes consistant à :
• envoyer (étape 201) des informations de configuration d'unité de largeur de bande à un premier dispositif terminal qui est un dispositif terminal de nouvelle radio, NR, à capacité réduite, NR REDCAP, dans lequel les informations de configuration d'unité de largeur de bande comprennent des informations de configuration d'une première unité de largeur de bande et des informations de configuration d'une seconde unité de largeur de bande, dans lequel au moins l'une parmi la première unité de largeur de bande et la seconde unité de largeur de bande comprend un bloc de signal de synchronisation, SSB ;
• envoyer des informations de commande de liaison descendante au premier dispositif terminal, dans lequel les informations de commande de liaison descendante comprennent un champ d'indication de ressource de domaine de fréquence utilisé pour indiquer conjointement une attribution de ressource de fréquence et une indication de commutation de la première unité de largeur de bande à la seconde unité de largeur de bande, dans lequel l'attribution de ressource de fréquence indique une ressource de domaine de fréquence au sein de la seconde unité de largeur de bande pour le canal partagé de liaison descendante physique, PDSCH, ou le canal partagé de liaison montante physique, PUSCH ;
• planifier (étape 204) des données du premier dispositif terminal sur la base d'un retard de commutation, dans lequel le retard de commutation est un retard du premier dispositif terminal commutant de la première unité de largeur de bande à la seconde unité de largeur de bande, le retard de commutation est :
○ un premier retard, le premier retard est inférieur à un second retard, et le second retard est un retard de commutation pris en charge par un second dispositif terminal, le second dispositif terminal étant un dispositif terminal existant dans un système NR, ou,
○ un retard de commutation du premier dispositif terminal commutant de la première unité de largeur de bande à la seconde unité de largeur de bande et est l'un parmi N retards, les N retards sont des retards de commutation pris en charge par le premier dispositif terminal, N est un entier supérieur ou égal à 2, et les N retards comprennent le premier retard ;
• soit envoyer les données planifiées au premier dispositif terminal sur la ressource de domaine de fréquence du PDSCH au sein de la seconde unité de largeur de bande comme indiqué par l'attribution de ressource de fréquence envoyée, soit recevoir les données planifiées en provenance du premier dispositif terminal sur la ressource de domaine de fréquence du PUSCH au sein de la seconde unité de largeur de bande comme indiqué par l'attribution de ressource de fréquence envoyée.

9. Procédé selon la revendication 8, dans lequel une position de ressource de fréquence de la première unité de largeur de bande est différente d'une position de ressource de fréquence de la seconde unité de largeur de bande, la première unité de largeur de bande et la seconde unité de largeur de bande correspondent à un même identifiant de partie de largeur de bande, BWP, et le retard de commutation est le premier retard.

10. Procédé selon la revendication 8, dans lequel une position de ressource de fréquence de la première unité de largeur de bande est différente d'une position de ressource de fréquence de la seconde unité de largeur de bande, la première unité de largeur de bande et la seconde unité de largeur de bande correspondent à des identifiants BWP différents, et le retard de commutation est un retard autre que le premier retard des N retards.

11. Premier dispositif terminal, le premier dispositif terminal étant un dispositif terminal de nouvelle radio, NR, à capacité réduite, NR REDCAP, dans lequel le premier dispositif terminal est configuré pour effectuer l'un quelconque des procédés selon les revendications 1 à 7.

12. Dispositif de réseau configuré pour effectuer l'un quelconque des procédés selon les revendications 8 à 10.
